(19) Europäisches Patentamt
European Patent Office
Office européen des brevets

(11) **EP 4 478 140 B1**

(12) **EUROPEAN PATENT SPECIFICATION**

(45) Date of publication and mention
of the grant of the patent:
**08.04.2026 Bulletin 2026/15**

(21) Application number: **22953091.0**

(22) Date of filing: **27.07.2022**

(51) International Patent Classification (IPC):
**G05B 19/409** *(2006.01)*  **G05B 19/18** *(2006.01)*
**B23Q 11/10** *(2006.01)*  **B23Q 11/00** *(2006.01)*

(52) Cooperative Patent Classification (CPC):
**B23Q 11/005; G05B 19/18; G05B 19/409;**
B23Q 11/10; G05B 2219/35245; G05B 2219/35252;
G05B 2219/49052; Y02P 70/10

(86) International application number:
**PCT/JP2022/029024**

(87) International publication number:
**WO 2024/023998 (01.02.2024 Gazette 2024/05)**

(54) **COOLANT SUPPLY DEVICE, MACHINE TOOL, METHOD FOR SUPPLYING COOLANT TO MACHINE TOOL, AND PROGRAM**

KÜHLMITTELZUFUHRVORRICHTUNG, WERKZEUGMASCHINE, VERFAHREN ZUR KÜHLMITTELZUFUHR FÜR EINE WERKZEUGMASCHINE UND PROGRAMM

DISPOSITIF D'ALIMENTATION EN LIQUIDE DE REFROIDISSEMENT, MACHINE-OUTIL, PROCÉDÉ D'ALIMENTATION EN LIQUIDE DE REFROIDISSEMENT D'UNE MACHINE-OUTIL, ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.12.2024 Bulletin 2024/51**

(73) Proprietor: **Yamazaki Mazak Corporation**
**Niwa-gun, Aichi 480-0197 (JP)**

(72) Inventors:
• **NISHI, Hironori**
**Niwa-gun, Aichi 480-0197 (JP)**
• **OKUDA, Toshihito**
**Niwa-gun, Aichi 480-0197 (JP)**
• **ISEKI, Akira**
**Niwa-gun, Aichi 480-0197 (JP)**

(74) Representative: **TBK**
**Bavariaring 4-6**
**80336 München (DE)**

(56) References cited:
WO-A1-2013/038567   DE-A1- 102009 026 656
JP-A- 2017 113 849   JP-A- 2021 115 682
US-A1- 2002 081 167   US-A1- 2014 338 765
US-A1- 2015 025 673   US-A1- 2018 029 183

**Description**

Technical Field

The present invention relates to a coolant supplier, a machine tool, a method of supplying a coolant to a machine tool, and a program.

Background Art

Patent Literature (PTL) 1 discloses a technique for a machine tool including a plurality of nozzles. In the machine tool, a coolant valve is provided at each of a plurality of conduits. The technique is to open and close the conduit using the coolant valve so as to switch between amounts of jetting through a nozzle through which coolant is supplied and/or the amount of jetting through each of the nozzles. In Patent Literature 1, the amount of discharge through the nozzle through which coolant is discharged and/or the amount of discharge through each nozzle are determined based on the height of each part of workpiece. Patent Literature 2 discloses a technique for a machine tool including a plurality of nozzles. The technique is to switch, using a timer, between nozzles through which coolant is discharged. Patent Literature 3 discloses a machine tool capable of setting, on an individual-tool basis, the output of an inverter pump that discharges coolant. Patent Literature 4 discloses a technique for a machine tool including a plurality of nozzles. The technique is to automatically change, based on the number of nozzles through which coolant is discharged, the output of a pump that discharges the coolant.
Patent Literature 5 discloses a method and an apparatus for directing a coolant stream for use with a computer numerically controlled (CNC) machine tool which includes a nozzle pivotably mounted on a machine tool. The position of the nozzle is automatically adjusted using information available in the CNC machine control program and the part program (i.e. G-Code) to determine where to direct the coolant nozzle at each instant in time. Integration with the machine control program allows the coolant delivery system to be continuously adaptive to machine position. The position of the coolant delivery system is computed by algorithms according to a user selected strategy. The strategy is specified within the control language of the machine control program (i.e. G-Code). No operator programming outside of using G-Code commands to select the desired operating mode is required to direct the coolant nozzle. The user can change operating modes while the machine is running by issuing G-Code commands.
Patent Literature 6 discloses a coolant supply apparatus which includes variable delivery coolant pump pumping up coolant from coolant tank, a plurality of branch passages allowing coolant delivered from coolant pump to flow separately to a plurality of parts of a machine tool, and machine control unit turning on and off on-off valves of the plurality of branch passages, wherein machine control unit, in response to a jet coolant instruction, opens only one branch passage to intensively supply coolant to the branch passage at the maximum delivery rate of coolant pump and closes the other branch passages.

Citation List

Patent Literature

PTL1: JP 2017-113849 A
PTL2: JP 2007-030109 A
PTL3: JP 5269955 B2
PTL4: JP 7-127565 A
PTL5: US 2018/029183 A1
PTL6: US 2014/338765 A1

Summary of Invention

Technical Problem

In the example according to Patent Literature 1, coolant is discharged based on the shape of a workpiece, causing the coolant to be supplied not only to the part of the workpiece that is being machined by a tool but also to other parts of the workpiece. Thus, there is such a problem that the supply of coolant is highly possibly wasted. In the example according to Patent Literature 2, the nozzle switching is performed using a timer independent of a machining program. This involves a complicated user operation, and some machining programs might have chip stagnation problems. The example according to Patent Literature 4 also has a complicated user operation problem in that a user has to operate an opening-closing device to switch between the nozzles through which coolant is discharged. In the example according to Patent Literature 3, the amount of discharge of coolant is controlled on an individual-tool basis. This technique, however, does not involve switching of nozzles. Additionally, in Patent Literatures 1, 2, and 3, there may be a case where the supply of coolant is excessively higher than the amount of coolant necessary for machining purposes. This has resulted in an unnecessary increase in power consumption.

An object of the technique disclosed in the present application is to provide an improved coolant supplier, an improved machine tool, an improved method of supplying a coolant to a machine tool, and an improved program. The coolant supplier, the machine tool, the method, and the program are capable of, in coordination with a machining program, switching between nozzles through which coolant is discharged and/or between degrees of coolant discharge, and thus realize a simplified user operation and a reduction in power consumption. Another object of the technique disclosed in the present application is to provide a coolant supplier, a machine tool, a method of supplying a coolant to a machine tool, and a program which are capable of, while the machining program is being executed, easily changing between nozzles through which coolant is discharged and/or between degrees of coolant discharge.

Solution to Problem

These objects are achieved by a method of supplying a coolant to a machine tool according to claim 1. Furthermore, a program according to claim 12, a coolant supplier according to claim 13 and a machine tool according to claim 14 are provided. Advantageous further developments are as set forth in the dependent claims.

A first example of a method of supplying a coolant to a machine tool includes reading, from a machining program, a called code included in at least one coolant specifying code that specifies opening and/or closing of each valve of a plurality of valves, the each valve being provided at one of a plurality of coolant supply conduits connected to a plurality of respective nozzles mounted on a machine tool, and that specifies a degree of discharge of the coolant from a pump to each nozzle of the plurality of nozzles. The method also includes controlling the opening and/or closing of the each valve based on the called code. The method also includes, based on the called code, controlling the pump to discharge the coolant by the degree of discharge.

[0008]　, The method of supplying the coolant further includes determining at least one valve among the plurality of valves specified to be opened by the at least one coolant specifying code, and determining a region to be exposed to the coolant jetted through at least one nozzle, among the plurality of nozzles, that is connected to the at least one valve. The method further includes displaying the at least one coolant specifying code and the region corresponding to the at least one coolant specifying code in coordination with each other. The method further includes, based on the degree of discharge of the coolant specified by the at least one coolant specifying code, determining a total amount of the coolant to be jetted through the at least one nozzle. The method further includes displaying at least one of the total amount and an amount of the coolant to be jetted through the at least one nozzle in a manner that correlates the at least one coolant specifying code and the at least one of the total amount and the amount of the coolant.

According to a second example, the method of supplying the coolant, according to the first example, further includes displaying power consumed by the pump when the pump is operated based on the at least one coolant specifying code.

According to a third example, the method of supplying the coolant, according to the first or second example, includes, while the coolant is being discharged from the pump by executing the machining program, determining at least one open valve, among the plurality of valves, that has been opened as specified by the called code. The method further includes determining a jetting region to be exposed to the coolant jetted through at least one jetting nozzle, among the plurality of nozzles, that is connected to the at least one open valve. The method further includes, based on the degree of discharge of the coolant specified by the called code, determining an amount of total jetting of the coolant jetted through the at least one jetting nozzle. The method further includes displaying the jetting region and at least one of the amount of total jetting and an amount of individual jetting of the coolant jetted through each of the at least one jetting nozzle. The method further includes, upon receipt of a command to change the opening and/or closing of the each valve, rewriting data to open a changed open valve and close a changed closed valve, the data specifying the opening and/or closing of the each valve and being related to the called code.

According to a fourth example, the method of supplying the coolant, according to the third example, further includes providing a plurality of toggle switches corresponding to the plurality of respective valves such that at least one toggle switch, among the plurality of toggle switches, that corresponds to the at least one open valve is oriented toward a first side, and a toggle switch, among the plurality of toggle switches, that corresponds to a valve other than the at least one open valve is oriented toward a second side opposite to the first side. The method further includes, upon detection of a change in orientation of at least one toggle switch of the plurality of toggle switches, specifying, as the changed open valve, the valve corresponding to the toggle switch oriented toward the first side, and specifying, as the changed closed valve, the valve corresponding to the toggle switch oriented toward the second side.

According to a fifth example, the method of supplying the coolant, according to any one of the first to fourth erxamples, includes, while the coolant is being discharged from the pump by executing the machining program, determining at least one open valve, among the plurality of valves, that has been opened as specified by the called code. The method further includes determining a jetting region to be exposed to the coolant jetted through at least one jetting nozzle, among the plurality of nozzles, that is connected to the at least one open valve. The method further includes, based on the degree of discharge of the coolant specified by the called code, determining an amount of total jetting of the coolant jetted through the at least one jetting nozzle. The method further includes displaying the jetting region and at least one of the amount of total jetting and an amount of individual jetting of the coolant jetted through each of the at least one jetting nozzle. The method further includes, upon receipt of a command to change the degree of discharge, rewriting the degree of discharge specified by the called code to a changed degree of discharge.

According to a sixth example, the method of supplying the coolant, according to the fifth example, further includes providing a slider including an indicator configured to indicate the degree of discharge from the pump specified by the called code, and a runner provided at a leading end portion of the indicator. The method further includes, upon detection of a movement of the runner, specifying, as the changed degree of discharge, a changed degree indicated by the indicator.

According to a seventh example, the method of supplying the coolant, according to any of the first to sixth examples, further includes, upon receipt of a command to replace the called code with a replacement code, among the at least one coolant specifying code, that is other than the called code while the coolant is being discharged from the pump by executing the machining program, rewriting the machining program to call the replacement code in the machining program.

According to an eighth example, in the method of supplying the coolant, according to any one of the first to seventh examples, the specifying of the degree of discharge of the coolant includes specifying an output of the pump.

According to a ninth example, in the method of supplying the coolant, according to the eighth embodiment, the output of the pump is indicated by a rotational speed of the pump or an operation frequency of the pump.

According to a tenth example, in the method of supplying the coolant, according to any one of the first to seventh examples, among the plurality of valves, a wide-area control valve is provided at a coolant supply conduit, among the plurality of coolant supply conduits, that is connected to two or more divisional nozzles among the plurality of nozzles.

According to an eleventh example, in the method of supplying the coolant, according to the tenth example, a region to be exposed to the coolant jetted through the two or more divisional nozzles occupies one section among a plurality of sections obtained by dividing a machining region of the machine tool.

According to a twelfth example, in the method of supplying the coolant, according to any one of the first to seventh examples, the plurality of valves are provided at the plurality of respective nozzles.

According to a thirteenth exampe, a program includes an instruction for, when the program is executed by a hardware processor, causing the hardware processor to perform the method of supplying the coolant according to any one of the first to twelfth example. It is to be noted that the program may be stored in a storage medium readable by the hardware processor.

According to a fourteenth example, a coolant supplier includes the program according to the thirteenth exampe, the pump, a coolant tank connected to the pump and configured to store the coolant, the plurality of nozzles, a plurality of coolant supply conduits connecting the plurality of respective nozzles to the pump, and a plurality of valves provided at the plurality of respective coolant supply conduits. It is to be noted that the coolant supplier may include, instead of the program according to the thirteenth example , a storage medium storing the program according to the thirteenth example and readable by the hardware processor.

According to a fifteenth example, a machine tool includes the coolant supplier according to the fourteenth example, the hardware processor, and a memory. The program is installed in the memory and executed by the hardware processor. It is to be noted that the machine tool may include means for performing the processing of the method of supplying the coolant according to any one of the first to twelfth examples, the pump, a coolant tank connected to the pump and configured to store the coolant, the plurality of nozzles, a plurality of coolant supply conduits connecting the plurality of respective nozzles to the pump, and a plurality of valves provided at the plurality of respective coolant supply conduits. It is also to be noted that the machine tool may further include a display as means for performing the display processing according to the first to sixth examples, and an interface for inputting the command according to the third example and the fifth example, for detecting the orientation movement according to the fourth example, and for detecting the movement of the runner according to the sixth example. An example of the interface is a touch panel.

The method of supplying the coolant according to the first example, the program according to the thirteenth example, which includes an instruction for causing the hardware processor to perform the processing of the method of supplying the coolant according to the first exampe, the coolant supplier according to the fourteenth example, which includes the program, and the machine tool according to the fifteenth example , which includes the means for performing the processing of the method of supplying the coolant according to the first example, are capable of determining the opening and/or closing of a plurality of valves and the degree of discharge of coolant based on a coolant specifying code incorporated in the machining program. In the machining program, a tool position and a tool type are specified. By specifying a coolant specifying code based on the tool position and the tool Type, a part that needs coolant and a necessary amount of coolant supply can be set. In Patent Literature 2, it is necessary to set a timer to match the time when the machining program is executed. This kind of matching, however, can be readily set by setting a coolant specifying code in the machining program, leading to a significant reduction in user workload. In the invention of Patent Literature 3, the amount of discharge of coolant can only be controlled based on the tool To be called, that is, coolant can not be controlled to be supplied to a necessary position. Thus, the techniques according to the first to fifteenth examples are more advantageous. In Patent Literature 4, if the amount of discharge of coolant is to be controlled similarly to the techniques according to the first to fifteenth examples, it is necessary to manually set the valve through which coolant is supplied. In contrast, the techniques according to the first to fifteenth examples significantly reduce user workload.

In the method of supplying the coolant according to the first example, in the program according to the thirteenth example, which includes an instruction for causing the hardware processor to perform the processing of the method of supplying the coolant according to the first example, in the coolant supplier according to the fourteenth example, which includes the program, and in the machine tool according to the fifteenth example, which includes means for performing the processing of the method of supplying the coolant according to the first example, a region to be exposed to coolant and the amount of the coolant can be checked, as specified by the at least one coolant specifying code. More specifically, a jetting region that is to be exposed to coolant and that is specified by the called code included in the at least one coolant specifying code can be checked, and the amount of jetting of the coolant can be checked. Additionally, in a case where the at least one coolant specifying code includes a replacement code replaceable with the called code, it is possible to check: whether there is a replacement code that specifies a replacement region that would be exposed by a more suitable amount of coolant than the region specified by the called code; and the amount of the replacement jetting.

In the method of supplying the coolant according to the second example , in the program according to the thirteenth example, which includes an instruction for causing the hardware processor to perform the processing of the method of supplying the coolant according to the second example, in the coolant supplier according to the fourteenth example, which includes the program, and in the machine tool according to the fifteenth example, which includes means for performing the processing of the method of supplying the coolant according to the second example, the power consumed by the pump based on the at least one coolant specifying code can be checked. More specifically, the power consumed by the pump based on the called code included in the at least one coolant specifying code can be checked. Additionally, in a case where the at least one coolant specifying code includes a replacement code replaceable with the called code, it is possible to check whether there is a replacement code that specifies a more efficient consumption of power than power consumption specified by the called code.

In the method of supplying the coolant according to the third example, in the program according to the thirteenth example, which includes an instruction for causing the hardware processor to perform the processing of the method of supplying the coolant according to the third example, in the coolant supplier according to the fourteenth example, which includes the program, and in the machine tool according to the fifteenth example, which includes means for performing the processing of the method of supplying the coolant according to the third example, the opening and/or closing of the plurality of valves specified by the called code read from the machining program can be changed while checking the jetting state of the coolant.

In the method of supplying the coolant according to the fourth example, in the program according to the thirteenth example, which includes an instruction for causing the hardware processor to perform the processing of the method of supplying the coolant according to the fourth example, in the coolant supplier according to the fourteenth example, which includes the program, and in the machine tool according to the fifteenth example, which includes means for performing the processing of the method of supplying the coolant according to the fourth example, the opening and/or closing of the plurality of valves can be specified using a toggle switch, which many users are accustomed to. This leads to facilitated setting.

In the method of supplying the coolant according to the fifth example, in the program according to the thirteenth example, which includes an instruction for causing the hardware processor to perform the processing of the method of supplying the coolant according to the fifth example, in the coolant supplier according to the fourteenth example, which includes the program, and in the machine tool according to the fifteenth example, which includes means for performing the processing of the method of supplying the coolant according to the fifth example, the degree of discharge of coolant specified by the called code read from the machining program can be changed while checking the jetting state of the coolant.

In the method of supplying the coolant according to the sixth example, in the program according to the thirteenth example, which includes an instruction for causing the hardware processor to perform the processing of the method of supplying the coolant according to the sixth example, in the coolant supplier according to the fourteenth example, which includes the program, and in the machine tool according to the fifteenth example, which includes means for performing the processing of the method of supplying the coolant according to the sixth example, the degree of discharge of coolant can be specified using a slider, which many users are accustomed to. This leads to facilitated setting.

In the method of supplying the coolant according to the seventh example, in the program according to the thirteenth example, which includes an instruction for causing the hardware processor to perform the processing of the method of supplying the coolant according to the sixth example, in the coolant supplier according to the fourteenth example, which includes the program, and in the machine tool according to the fifteenth example, which includes means for performing the processing of the method of supplying the coolant according to the seventh example, in a case where there is a replacement code better than the currently set called code, the called code read from the machining program can be replaced with the replacement code.

In the method of supplying the coolant according to the eighth example, in the program according to the thirteenth example, which includes an instruction for causing the hardware processor to perform the processing of the method of supplying the coolant according to the eighth example, in the coolant supplier according to the fourteenth example, which includes the program, and in the machine tool according to the fifteenth example, which includes means for performing the processing of the method of supplying the coolant according to the eighth example, a pump output obtained from the frequency of an inverter that controls the motor to operate the pump is regarded as the degree of discharge of coolant. This facilitates implementation of the technique associated with the specifying of the degree of discharge of coolant.

In the method of supplying the coolant according to the ninth example, in the program according to the thirteenth example, which includes an instruction for causing the hardware processor to perform the processing of the method of supplying the coolant according to the eighth example, in the coolant supplier according to the fourteenth example, which includes the program, and in the machine tool according to the fifteenth example, which includes means for performing the processing of the method of supplying the coolant according to the ninth example, the output of the pump is indicated by the rotational speed of the pump or the operation frequency of the pump. The degree of discharge of coolant monotonously increases relative to the rotational speed of the pump or the operation frequency of the pump. Therefore, the rotational speed of the pump and the operation frequency of the pump are effective as a scale of measurement indicating the degree of discharge of coolant. Additionally, the rotational speed of the pump or the operation frequency of the pump can be accurately estimated by the inverter that controls the motor to operate the pump, as compared with the amount of pump discharge, which necessitates a flow rate sensor as an additional element. Thus, the rotational speed of the pump or the operation frequency of the pump facilitates implementation of the technique associated with the specifying of the output of the pump.

In the method of supplying the coolant according to the tenth example, in the program according to the thirteenth example, which includes an instruction for causing the hardware processor to perform the processing of the method of supplying the coolant according to the tenth example, in the coolant supplier according to the fourteenth example, which includes the program, and in the machine tool according to the fifteenth example, which includes means for performing the processing of the method of supplying the coolant according to the tenth example, the jetting of coolant through the plurality of nozzles can be controlled by the opening and/or closing of a wide-area control valve. This ensures that the coolant supplier can be produced at low cost as compared with a case where valves are mounted on all the respective nozzles. Also, by using a wide-area control valve, coolant can be supplied to a plurality of positions in the machining region. This enables a worker to perform simple control to determine a coolant jetting region.

In the method of supplying the coolant according to the eleventh example, in the program according to the thirteenth example, which includes an instruction for causing the hardware processor to perform the processing of the method of supplying the coolant according to the eleventh example, in the coolant supplier according to the fourteenth example, which includes the program, and in the machine tool according to the fifteenth example, which includes means for performing the processing of the method of supplying the coolant according to the eleventh example, the two or more divisional nozzles controlled by the wide-area control valve correspond to one section among a plurality of sections obtained by dividing the machining region. This ensures that whether to jet coolant to a section adapted to a usage of the machining region can be controlled by the wide-area control valve. As a result, an effective supply of coolant is ensured.

In the method of supplying the coolant according to the twelfth example, in the program according to the thirteenth example, which includes an instruction for causing the hardware processor to perform the processing of the method of supplying the coolant according to the twelfth example, in the coolant supplier according to the fourteenth example, which includes the program, and in the machine tool according to the fifteenth example, which includes means for performing the processing of the method of supplying the coolant according to the twelfth example, the plurality of valves are provided at the plurality of respective nozzles. This ensures that the jetting nozzles are set meticulously.

Effects of Invention

The technique disclosed in the present application provides a coolant supplier, a machine tool, a method of supplying a coolant to a machine tool, and a program. The coolant supplier, the machine tool, the method, and the program are capable of, in coordination with a machining program, switching between nozzles through which coolant is discharged and/or between degrees of coolant discharge, and thus realize a simplified user operation and a reduction in power consumption. Further, the technique provides a coolant supplier, a machine tool, a method of supplying a coolant to a machine tool, and a program. The coolant supplier, the machine tool, the method, and the program are capable of, while the machining program is being executed, easily changing between nozzles through which coolant is discharged and/or between degrees of coolant discharge.

Brief Description of Drawings

[FIG. 1] FIG. 1 illustrates a schematic configuration of a machine tool according to an embodiment.
[FIG. 2] FIG. 2 is a block diagram of a hardware configuration of the machine tool according to the embodiment.
[FIG. 3] FIG. 3 illustrates a machining program example.
[FIG. 4A] FIG. 4A illustrates another machining program example.
[FIG. 4B] FIG. 4B illustrates another machining program example.
[FIG. 5] FIG. 5 is a flowchart of processing performed in a method of supplying coolant in the machine tool.
[FIG. 6] FIG. 6 illustrates a setting interface example for coolant setting data.
[FIG. 7A] FIG. 7A is a flowchart of processing performed in the method of supplying coolant in the machine tool at the time of setting on the interface illustrated in FIG. 6.
[FIG. 7B] FIG. 7B is a flowchart of processing performed in the method of supplying coolant in the machine tool at the time of setting on the interface illustrated in FIG. 6.
[FIG. 7C] FIG. 7C is a flowchart of processing performed in the method of supplying coolant in the machine tool at the time of setting on the interface illustrated in FIG. 6.
[FIG. 7D] FIG. 7D is a flowchart of processing performed in the method of supplying coolant in the machine tool at the time of setting on the interface illustrated in FIG. 6.
[FIG. 7E] FIG. 7E is a flowchart of processing performed in the method of supplying coolant in the machine tool at the time of setting on the interface illustrated in FIG. 6.
[FIG. 8] FIG. 8 illustrates another setting interface example for the coolant setting data.
[FIG. 9] FIG. 9 is a flowchart of processing performed in the method of supplying coolant in the machine tool at the time of setting performed on the interface illustrated in FIG. 8.
[FIG. 10] FIG. 10 is a block diagram of a hardware configuration of a machine tool according to a modification.

Description of Embodiments

The present invention will now be described with reference to the accompanying drawings, wherein like reference numerals designate corresponding or identical elements throughout the various drawings.

<Embodiment>

<Configuration of Machine Tool 1>

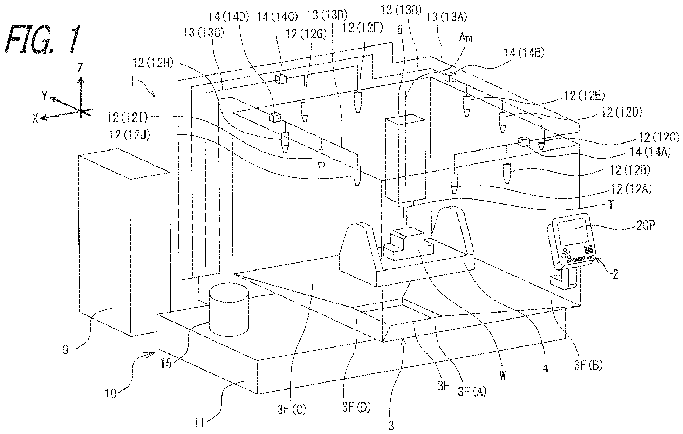

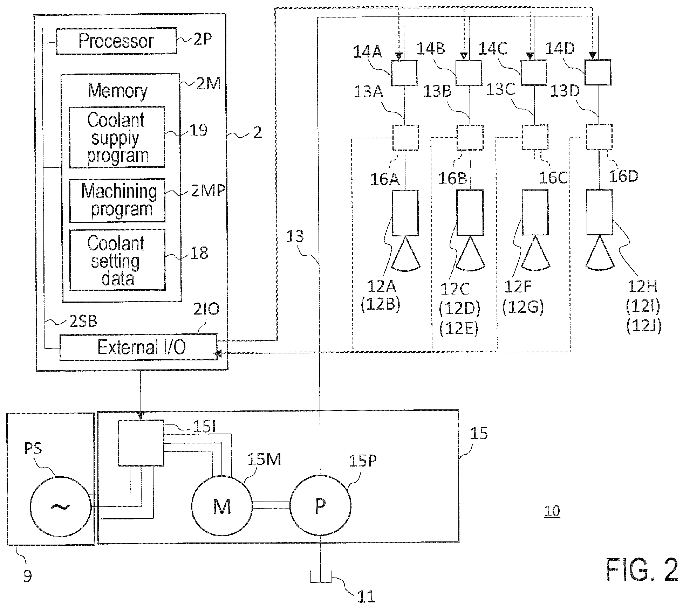

FIG. 1 illustrates a configuration of a machine tool 1 according to an embodiment of the present invention. The machine tool 1 includes a numerical controller 2, an internal cover 3, a table 4, on which a workpiece W is placed, a spindle unit 5, to which a tool T is attached, a switchboard 9, and a coolant supplier 10. The machine tool 1 includes a spindle mover, not illustrated, that holds the spindle unit 5 and moves the spindle unit 5 at least one direction of X axis, Y axis, and Z axis illustrated in FIG. 1. The machine tool 1 includes a table mover, not illustrated, that moves the table 4 in at least one direction of the X axis, the Y axis, and the Z axis illustrated in FIG. 1. It is to be noted that the movement direction of the spindle unit 5 and the movement direction of the table 4 may vary greatly depending on the type of the machine tool 1. The numerical controller 2 controls the spindle mover and the table mover and controls the tool T to rotate. The numerical controller 2 includes an electronic circuit such as an electronic control unit, information processing means such as a hardware processor 2P, and storing means such as a memory 2M (see FIG. 2). The numerical controller 2 includes a control panel 2CP, which is a touch panel display or a like device on which information can be input and/or output for a user. The switchboard 9 supplies electricity to the numerical controller 2 and the coolant supplier 10. The machine tool 1 machines the workpiece W placed on the table 4 using the tool T attached to a leading end portion of the spindle unit 5. In the following description, an axis along the tool rotation axis ATW will be regarded as the Z axis, an axis perpendicular to the Z axis and along an upper surface of the internal cover 3 will be regarded as the Y axis, and an axis perpendicular to the Y axis and the Z axis will be regarded as the X axis.

The coolant supplier 10 includes a coolant tank 11, a plurality of nozzles 12, a plurality of coolant supply conduits 13, a plurality of valves 14, a pump device 15, and a coolant supply program 19 (see FIG. 2), which is executed by the numerical controller 2. Coolant is jetted into a machining region through the plurality of nozzles 12 to flow away chips generated during machining of the workpiece W. In order to collect the coolant, the internal cover 3 includes a discharge opening 3E, which is provided at a center lower portion of the internal cover 3 and is connected to the coolant tank 11, and a plurality of raked floors 3F, which are inclined downward and toward the discharge opening 3E. The internal cover 3 partitions the machining region in which the machine tool 1 machines the workpiece W from other regions. The coolant tank 11 is configured to store coolant. The plurality of nozzles 12 are mounted on the machine tool 1, and coolant is jetted through the plurality of nozzles 12. In FIG. 1, the plurality of nozzles 12 are individually designated as nozzles 12A to 12J.

The plurality of coolant supply conduits 13 respectively connect the plurality of nozzles 12 to the coolant tank 11. In FIG. 1, the plurality of coolant supply conduits 13 are individually designated as supply paths 13A to 13D. Each of the plurality of coolant supply conduits 13 connects some nozzles 12 of the plurality of nozzles 12 to the coolant tank 11. Specifically, the coolant supply conduit 13A connects the nozzle 12A and the nozzle 12B to the coolant tank 11. The coolant supply conduit 13B connects the nozzle 12C, the nozzle 12D, and the nozzle 12E to the coolant tank 11. The coolant supply conduit 13C connects the nozzle 12F and the nozzle 12G to the coolant tank 11. The coolant supply conduit 13D connects the nozzle 12H, the nozzle 12I, and the nozzle 12J to the coolant tank 11.

Coolant is jetted through some of the nozzles to a region. This region corresponds to one section among a plurality of sections obtained by dividing the machining region of the machine tool 1. For example, a region A is a region to which coolant is jetted through the some nozzles (the nozzle 12A and the nozzle 12B) connected to the coolant supply conduit 13A. The region A corresponds to one section among the plurality of sections obtained by dividing the machining region of the machine tool 1 (the region occupied by the plurality of raked floors 3F and the discharge opening 3E). A region B is a region to which coolant is jetted through the some nozzles (the nozzle 12C, the nozzle 12D, and the nozzle 12E) connected to the coolant supply conduit 13B. The region B corresponds to one section among the plurality of sections obtained by dividing the machining region (the above-specified region) of the machine tool 1. A region C is a region to which coolant is jetted through the some nozzles (the nozzle 12F and the nozzle 12G) connected to the coolant supply conduit 13C. The region C corresponds to one section among the plurality of sections obtained by dividing the machining region (the above-specified region) of the machine tool 1. A region D is a region to which coolant is jetted through the some nozzles (the nozzle 12H, the nozzle 12I, and the nozzle 12J) connected to the coolant supply conduit 13D. The region D corresponds to one section among the plurality of sections obtained by dividing the machining region (the above-specified region) of the machine tool 1. The regions A to D are displayed in coordination with the plurality of raked floors 3F. It is to be noted that the regions A to D may be referred to as sections A to D. The above-described example is a case where each of the regions A to D is a part of the machining region (the above-specified region). It is to be noted, however, that coolant may be jetted through some of the nozzles to a plurality of portions of the machining region (the above-specified region) that are spaced apart from each other. For example, one of the sections obtained by dividing the machining region (the above-specified region) may include the region B and the region D, and the coolant supply conduits connected to this section may be implemented by a single conduit.

The plurality of valves 14 are provided at the plurality of respective coolant supply conduits 13. Each of the plurality of valves 14 is preferably an electromagnetic control valve controlled to open and close by an electrical signal from the numerical controller 2. In FIG. 1, the plurality of valves 14 are individually designated as valves 14A to 14D. At least one of the plurality of valves 14 is provided at a coolant supply conduit 13, which is connected to some of the nozzles 12 of the plurality of nozzles 12. Thus, a valve provided at a coolant supply conduit 13, which is connected to some of the nozzles, may be referred to as wide-area control valve. The valve 14A is provided at the coolant supply conduit 13A, and is opened when coolant is supplied to the region A. The valve 14B is provided at the coolant supply conduit 13B, and is opened when coolant is supplied to the region B. The valve 14C is provided at the coolant supply conduit 13C, and is opened when coolant is supplied to the region C. The valve 14D is provided at the coolant supply conduit 13D, and is opened when coolant is supplied to the region D. The valves 14A to 14D are wide-area control valves. The pump device 15 is connected to the plurality of coolant supply conduits 13. The pump device 15 discharges coolant to an jetting nozzle that is among the nozzles connected to the coolant supply conduits 13 corresponding to open valves among the plurality of valves 14.

With the above-described configuration, the coolant supplier 10 pumps up coolant using the pump device 15, and causes the coolant to pass through the plurality of coolant supply conduits 13 and be jetted through the jetting nozzles connected to open valves that are among the plurality of valves 14. Thus, the coolant is applied to the workpiece W that is being machined or to the plurality of raked floors 3F attached with chips generated during of machining. As a result, chips are removed.

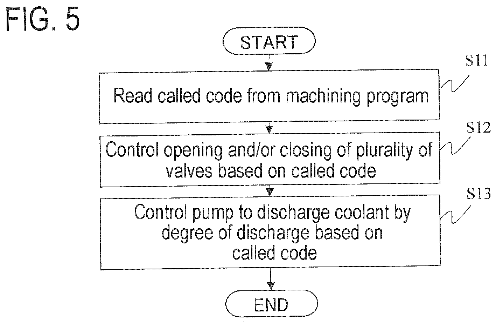

FIG. 2 is a block diagram of a hardware configuration of the machine tool 1 according to the embodiment. As illustrated in FIG. 2, the numerical controller 2 includes the hardware processor 2P, the memory 2M, a system bus 2SB, and an external I/O interface 2IO. The system bus 2SB includes an address bus, a data bus, and a control bus, similarly to a general-purpose computer. The external I/O interface 2IO is connected to an external device (for example, the plurality of valves 14 and the pump device 15). The external I/O interface 2IO transmits an electrical signal for open-close control of the plurality of valves 14. In the memory 2M, a machining program 2MP for machining the workpiece W and the coolant supply program 19 are installed. The memory 2M is configured to store the machining program 2MP and the coolant supply program 19. The hardware processor 2P executes the machining program 2MP to control the spindle unit 5. The hardware processor 2P executes the coolant supply program 19 to control the plurality of valves 14 and the pump device 15. The coolant supply program 19 includes processing for causing the hardware processor 2P to perform processing of a coolant supply method illustrated in FIGs. 5, 7A to 7C, and 9, described later.

The pump device 15 includes an inverter 15I, a motor 15M, and a pump 15P. The inverter 15I drives the motor 15M based on a drive signal transmitted from the numerical controller 2 via the external I/O interface 2IO. The inverter 15I controls the rotational speed of the motor 15M based on the drive signal from the numerical controller 2. The motor 15M rotates a skewed plate of the pump 15P. The pump 15P is connected to the coolant tank 11. The pump 15P is configured to discharge coolant from the coolant tank 11 and supply the coolant to the plurality of nozzles 12. The switchboard 9 includes a power source PS, which supplies electricity to the inverter 15I.

Next, details of the machining program 2MP will be described. In this embodiment, the machining program 2MP is described by a program code for numerical control of the machine tool 1. In the machining program 2MP, at least the following are defined.

> (1) Common unit: A material and shape of pre-machined workpiece W.
> (2) Basic coordinate unit: A method of setting a workpiece coordinate system and a method of setting a machine coordinate system.
> (3) Machining unit: A machining method and a machined shape for each part of a final machined shape.

The common unit, the basic coordinate unit, and the machining unit each have a unit number.

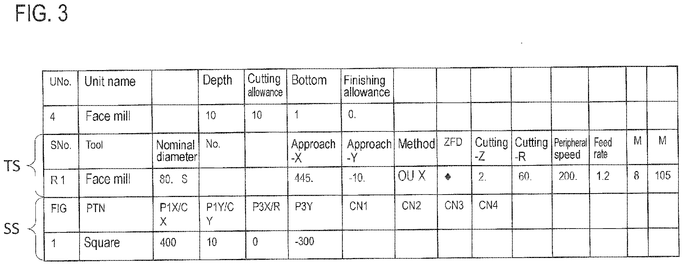

As illustrated in FIG. 3, the machining unit includes a unit number UNo., information (unit name) for identifying a machining content, a tool sequence TS, which is for setting the tool Ta and cutting conditions of the tool Ta, and a shape sequence SS, which defines a machined shape obtained by machining in the machining unit. The tool sequence TS is intended to mean a series of machining stages necessary for forming a machined shape of a part (for example, one bar material and one threaded hole) specified in the machining unit. The shape sequence SS is intended to mean a collection of segments in the workpiece coordinate for determining a machined shape. The segments are defined by a start point and an end point of a nose of the tool and by a connection relationship (such as a line and an arc) between the start point and the end point.

In the example illustrated in FIG. 3, the machining unit includes a single tool sequence TS and a single shape sequence SS. The machining unit may, however, include two tool sequences, namely, a tool sequence for rough machining and a tool sequence for finishing. In order to accommodate a complicated machined shape, the machining unit may include a plurality of shape sequences. In a case where the machining unit includes a plurality of tool sequences and a plurality of shape sequences, the machining unit is implemented by, first, causing the tool to move to form the shapes specified by all the shape sequences for each tool sequence in accordance with the alignment order of the tool sequences. Each tool sequence is distinguished from other tool sequences by a sequence number SNo. Each shape sequence is distinguished from other shape sequences by a number specified in FIG item. Incidentally, the control of the coolant supplier 10 can be set on a tool sequence-TS basis. A method of the setting can include calling an M code, which defines a combination of the opening and/or closing of the plurality of nozzles 12 and the degree of discharge of coolant from the pump 15P. In this embodiment, the M code will be referred to as coolant specifying code. That is, the coolant specifying code specifies the opening and/or closing of the plurality of nozzles 12, and specifies the degree of discharge of coolant from the pump 15P. The specifying of the degree of discharge of coolant includes specifying the output of the pump 15P. Also, parameters associated with coolant discharge and specified by the M code will be collectively referred to as coolant discharge parameter. That is, the coolant specifying code specifies coolant discharge parameters. The coolant discharge parameter includes the opening and/or closing of the plurality of nozzles 12 and the degree of discharge of coolant from the pump 15P. Regarding the M code, in view of the fact that there are codes already reserved for other purposes, an unused code, which is not one of the already reserved codes, is set as a coolant specifying code. For example, M101 to M109 are used as coolant specifying codes. Among the coolant specifying codes, an M code called while the machining program 2MP is being executed will be referred to as called code. FIG. 3 illustrates an example in which a coolant specifying code M105 is specified in the tool sequence with sequence number R1. In this case, M105 is the called code. It is to be noted that in a case where the machining unit includes two tool sequences, namely, a tool sequence for rough machining and a tool sequence for finishing, a different coolant specifying code may be set for the tool sequence for rough machining and the tool sequence for finishing. In this case, in the machining program 2MP, the M code included in the tool sequence for rough machining is the called code while the tool sequence for rough machining is being implemented; the M code included in the tool sequence for finishing is the called code while the tool sequence for finishing is being implemented.

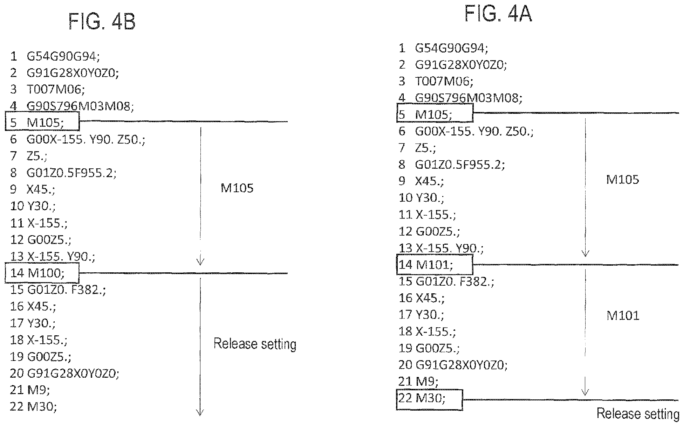

The machining program 2MP will not be limited to the example illustrated in FIG. 3 but may be a program based on EIA/ISO format. FIGs. 4A and 4B illustrate program examples based on EIA/ISO format. The machining program 2MP based on EIA/ISO format specifies coolant to be supplied through at least one nozzle specified by the coolant specifying code and by the degree of discharge specified by the coolant specifying code. The machining program 2MP based on EIA/ISO format specifies the coolant to be supplied from the time when the coolant specifying codes M101 to M109 are called until (1) another coolant specifying code is called, (2) an M code (M100) for releasing the coolant specifying code is called, or (3) an M code (M30) indicating the end of the machining program.

In the example illustrated in FIG. 4A, from the time when the code M105 is called until the code M101 is called, coolant is supplied based on a coolant discharge parameter specified by the code M105, which is the called code. From the time when the code M101 is called until the code M30 is called, coolant is supplied based on a coolant discharge parameter specified by the code M101, which is the called code. In the example illustrated in FIG. 4B, from the time when the code M105 is called until the code M100 is called, coolant is supplied based on the coolant discharge parameter specified by the code M105, which is the called code. From the time when the code M100 is called until the code M30 is called, all the nozzles 12 are open, and the pump 15P is operated at a base frequency. The base frequency is intended to mean a maximum frequency at which the motor 15M is able to continuously generate a rated torque. The base frequency is identical to a frequency of a commercial power source that supplies power to the switchboard 9.

Next, a content set by the coolant specifying code will be described. As illustrated in FIG. 2, the content set by the coolant specifying code is described in coolant setting data 18 and stored in the memory 2M. The coolant setting data 18 includes the M code, which specifies the coolant specifying code, information indicating the opening and/or closing of the plurality of valves 14 linked to the M code, and information indicating the degree of discharge of coolant from the pump 15P. The degree of discharge is intended to mean the output of the pump 15P; specifically, the degree of discharge may be represented by the rotational speed of the pump 15P (the motor 15M), which is controllable by the inverter 15I, or may be represented by the operation frequency of the pump 15P (the motor 15M). It is to be noted that the coolant setting data 18 may also include information indicating whether there is an jetting through at least one of the plurality of nozzles 12 each corresponding to the opening and/or closing of one of the plurality of valves 14 linked to the M code. In this respect, the coolant discharge parameter also includes the information indicating whether there is an jetting through at least one of the plurality of nozzles 12.

Next, a method of supplying coolant performed by the machine tool 1 will be described. FIG. 5 is a flowchart of processing of the supplying method. When the M code set in the coolant setting data 18 is included in the machining program 2MP, the coolant supply program 19 is called. At step S11, the processor 2P, which executes the coolant supply program 19, reads the called code (M code) from the machining program 2MP. At step S12, the processor 2P, which executes the coolant supply program 19, controls the opening and/or closing of the plurality of valves 14 based on the called code. In the following description of the embodiment, a valve specified to be opened by the called code will be referred to as open valve, and a valve specified to be closed by the called code will be referred to as closed valve. In any coolant specifying code, at least one open valve is specified. At step S13, the processor 2P, which executes the coolant supply program 19, controls the pump 15P to discharge coolant by the degree of discharge specified by the called code. Specifically, the processor 2P, which executes the coolant supply program 19, controls the pump 15P by transmitting a drive signal to the inverter 15I so that the rotational speed or operation frequency of the pump 15P is as specified by the coolant specifying code. It is to be noted that the operation frequency is a frequency of AC current output from the inverter 15I, which controls the motor 15M, which moves the pump 15P. This configuration enables the machine tool 1 to jet coolant through at least one jetting nozzle connected to at least one open valve among the plurality of valves 14.

<Setting of Coolant Setting Data 18 While Executing Machining Program 2MP>

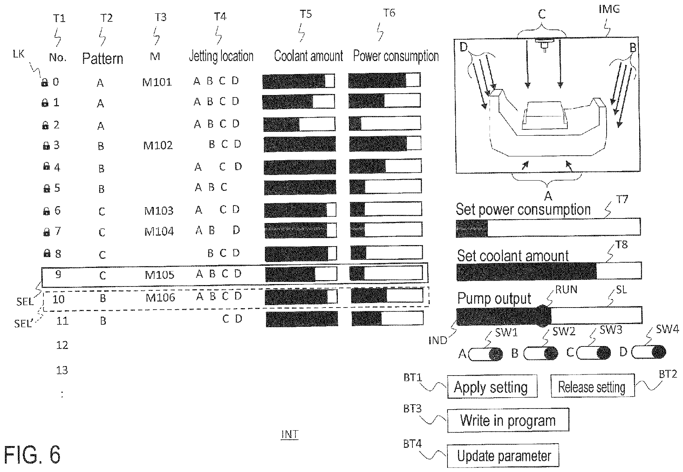

Next, a method of setting the coolant setting data 18 will be described. The user is able to set the coolant setting data 18 while executing the machining program 2MP. The processor 2P, which executes the coolant supply program 19, is configured to perform, while the machining program 2MP is being executed, processing of causing the control panel 2CP to display an interface INT illustrated in FIG. 6. The interface INT displays T1, T2, T3, T4, T5, and T6, which are for identifying a combination of the coolant specifying code and the coolant discharge parameter, in a manner that T1, T2, T3, T4, T5, and T6 are correlated with each other. T1 indicates setting number. T2 indicates pattern. T3 indicates coolant specifying code (M code). T4 indicates jetting location. T5 indicates coolant amount indicator. T6 indicates power consumption indicator. In the example illustrated in FIG. 6, a combination of the setting number T1, the pattern T2, the coolant specifying code (M code) T3, the jetting location T4, the coolant amount indicator T5, and the power consumption indicator T6 is displayed in a row. On the interface INT, a called code-related combination is displayed with a high-lighting SEL. That is, on the interface INT, a combination related to an M code called in the machining program 2MP is displayed with the high-lighting SEL. In the following description of the embodiment, a coolant specifying code that is not currently implemented will be referred to as replacement code. The replacement code is replaceable with the called code. In the example illustrated in FIG. 6, M105 is the currently implemented called code, and M101 to M104 are replacement codes.

The combination related to the M code displayed with the high-lighting SEL is changed to an other combination (for example, SEL') upon the touch panel detecting selection of the other combination. The operation of selecting this other combination may be referred to as replacement code selecting operation. Upon the touch panel detecting selection of the other combination, the selected combination (for example, SEL') is displayed with the high-lighting SEL, and the old combination is not displayed with the high-lighting SEL. It is to be noted that if a combination with no coolant specifying code (M code) T3 specified is selected, a pop-up window to input a coolant specifying code (M code) T3 is displayed. Upon input of a coolant specifying code (M code) T3, the combination is displayed with the high-lighting SEL. It is to be noted that the combination related to the currently implemented coolant specifying code (called code) and the combination related to the additionally selected coolant specifying code may be displayed in different colors of the high-lightings SEL and SEL'. In the following description, the additionally selected coolant specifying code may be referred to as selected replacement code.

A key icon LK is displayed on the left side of the setting number T1. The key icon LK is displayed as a sample and cannot be edited. In actual situations, the user copies an optimal combination from setting numbers 0 to 8 and edits the copied combination at setting number 9 or beyond. A method of the copying will not be elaborated upon here. The control panel 2CP, however, provides an interface with copy-and-paste functions provided on general user interfaces. The user, therefore, may utilize the interface. The setting number T1 is preferably included in the coolant setting data 18 and stored in the memory 2M.

The jetting location T4 indicates a region, among the regions A to D illustrated in FIG. 1, that is to be exposed to coolant through at least one nozzle connected to at least one valve specified to be opened by the coolant specifying code (M code) T3. In this example, coolant is jetted to the regions A to D, which correspond to respective symbols (for example, A to D) displayed as the jetting location T4. That is, in a case where the regions A to D are specified as the jetting location T4, the valves 14A to 14D are open. At the setting numbers T1 of 0 to 8, the jetting location T4 can not be corrected. At or after the setting number T1 of 9, the jetting location T4 can be corrected. A correcting method will be described later. The jetting location T4 may be displayed based on the information that indicates the opening and/or closing of the plurality of valves 14 and that is included in the coolant setting data 18. The jetting location T4 may also be included in the coolant setting data 18 as data different from the above information.

The coolant amount indicator T5 is an indicator that indicates the amount of jetting of coolant through each jetting nozzle per unit time. The amount of jetting of coolant through each jetting nozzle per unit time can be calculated by dividing the amount of discharge of coolant from the pump 15P per unit time, which can be estimated based on the output of the pump 15P (rated output × operation frequency/base frequency), by the number of jetting nozzles. In this example, the rated output of the pump 15P is intended to mean the amount of discharge of coolant from the pump 15P per unit time in a case of rated current caused to flow through the motor 15M, which operates the pump 15P. The number of jetting nozzles is obtained from the information that indicates the opening and/or closing of the plurality of valves 14 and that is included in the coolant setting data 18. The output (rotational speed or operation frequency) of the pump 15P is obtained from the information indicating the degree of discharge of coolant from the pump 15P. The coolant amount indicator T5 indicates a ratio of the amount of jetting of coolant through each jetting nozzle per unit time to an amount of jetting empirically determined to be normally necessary and sufficient. 100% of the necessary and sufficient amount of jetting is set to a maximum of the coolant amount indicator T5. If the calculated amount of jetting exceeds the necessary and sufficient amount of jetting, all the coolant amount indicators T5 show the maximum. As the number of jetting nozzles increases, the amount of jetting of coolant through each jetting nozzle per unit time decreases. It is to be noted, however, that the coolant amount indicator T5 may be an indicator that indicates a total amount of coolant jetted through the jetting nozzles per unit time. For example, this indicator may indicate a ratio of the amount of discharge of coolant to a product of the necessary and sufficient amount of jetting per nozzle and the number of nozzles. 100% of the product is set to a maximum of the indicator. If the calculated amount of jetting exceeds the necessary and sufficient amount of jetting, all the coolant amount indicators T5 show the maximum.

The power consumption indicator T6 is an indicator that indicates the power that the pump 15P consumes at the time of discharging. The power consumption of the pump 15P can be calculated by solving the following Formula (1) based on the specification of the pump 15P and the output (rotational speed or operation frequency) of the pump 15P.

$$\text{Power consumption} = \text{rated power consumption} \times (\text{operation frequency/base frequency})^{\wedge}3 + \alpha \times (\text{base frequency} - \text{operation frequency}) \qquad \text{Formula (1)}$$

The rotational speed or the operation frequency is obtained using the information that indicates the degree of discharge of coolant from the pump 15P and that is included in the coolant setting data 18. The rated power consumption is power consumed when the rated current is caused to flow through the motor 15M, which operates the pump 15P. The rated power consumption is stored in the memory 2M as a constant used in the coolant supply program 19. A theoretical formula for the power consumption is "rated power consumption × (operation frequency/base frequency) ^3". However, the difference between an actually measured value of the power consumption and the value obtained by the theoretical formula tends to increase approximately proportionally as the operation frequency becomes further away from the base frequency. The coefficient $\alpha$ is determined empirically based on a change in the difference value relative to the operation frequency. The algorithm of Formula (1) is incorporated in the coolant supply program 19. Another possible method is that the memory 2M stores a correlation between the degree of discharge of coolant from the pump 15P and the power consumption, and that for a degree of discharge not stored in the correlation, power consumption may be calculated based on a degree of discharge stored in a correlation close to the non-stored degree of discharge and using a method such as linear interpolation. The power consumption indicator T6 indicates a ratio of the power that the pump 15P consumes when the pump 15P discharges coolant by the coolant amount T5 to the rated power consumption of the pump 15P. The rated power consumption is stored in the memory 2M as a constant used in the coolant supply program 19. 100% of the rated power consumption is set to a maximum of the power consumption indicator T6. If the calculated power exceeds the rated power consumption, all the power consumption indicators T6 show the maximum. At the setting numbers T1 of 0 to 8, the coolant amount T5 and the power consumption T6 can not be corrected. At or after the setting number T1 of 9, the coolant amount T5 and the power consumption T6 can be corrected. A correcting method will be described later.

Pattern T2 includes any one of patterns A to C. The pattern A is an example in which coolant is discharged from all the regions A to D with different power consumptions and coolant amounts. In the pattern B, the output (rotational speed or operation frequency) of the pump 15P is determined so that the amount of jetting of coolant per unit time through each jetting nozzle of jetting nozzles determined in advance is equivalent to the above-described normally necessary and sufficient amount of jetting. The power consumption per unit time is determined by the output of the pump 15P. In the pattern C, the degree of discharge of coolant through the each jetting nozzle determined in advance is determined so that coolant is discharged with a low power consumption determined in advance. It is to be noted that in a case where a combination of any one of setting numbers 0 to 8 is copied and edited at setting number 9 or beyond, a deviation from the above-described features of pattern T2 may occur. In this case, however, information of the copied original pattern T2 is displayed. Pattern T2 is preferably included in the coolant setting data 18 and stored in the memory 2M. Pattern T2 may be omitted.

The coolant specifying code (M code) T3 can be set in correlation with any setting number T1. In FIG. 6, the coolant specifying codes T3 of M101 to M105 are respectively assign to setting numbers 0, 3, 6, 7, and 9. This setting can be done by a known method such as one including: clicking on the display position of the coolant specifying code (M code) T3 to cause a drop-down menu to be displayed; and selecting the coolant specifying code to be set from the drop-down menu (in a case of releasing the setting, an empty position is selected). It is to be noted that in the coolant setting data 18, pattern T2, the coolant specifying code (M code) T3, the information indicating the opening and/or closing of the plurality of valves 14, and the information indicating the degree of discharge of coolant from the pump 15P are correlated with setting number T1. It is also to be noted that the coolant setting data 18 includes information correlated with a replacement code, namely, the setting number T1, the pattern T2, the coolant specifying code (M code) T3, the information indicating the opening and/or closing of the plurality of valves 14, and the information indicating the degree of discharge of coolant from the pump 15P. The coolant setting data 18 includes information correlated with setting number T1 not assigned a replacement code, namely, the pattern T2, the coolant specifying code (M code) T3, the information indicating the opening and/or closing of the plurality of valves 14, and the information indicating the degree of discharge of coolant from the pump 15P.

The interface INT further includes a slider SL, a plurality of toggle switches SW 1 to SW4, a set power consumption indicator T7, a set coolant amount indicator T8, a machining region image IMG, a setting application button BT1, a setting release button BT2, a program writing button BT3, and a coolant discharge parameter update button BT4.

The slider SL includes an indicator IND, which indicates the output (rotational speed/operation frequency) of the pump 15P; and a runner RUN, which is provided at a leading end portion of the indicator IND. In a case where the replacement code selecting operation is not detected, the indicator IND indicates the degree of discharge of coolant from the pump 15P as specified by the called code. In a case where the replacement code selecting operation is detected, the indicator IND indicates the degree of discharge of coolant from the pump 15P as specified by the selected replacement code. In the following description, a called code in a case where the replacement code selecting operation is not detected and a selected replacement code in a case where the replacement code selecting operation is detected will be collectively referred to as editing target code. An initial value of the output of the pump 15P displayed as the indicator IND is an output of the pump 15P correlated with the editing target code. This output of the pump 15P is stored in the coolant setting data 18 as information indicating the degree of discharge of coolant from the pump 15P. The user is able to change the output of the pump 15P by operating the runner RUN on the touch panel. Upon the touch panel detecting a movement of the runner RUN, the processor 2P, which executes the coolant supply program 19, specifies the changed degree indicated by the indicator IND as the changed degree of discharge.

The plurality of toggle switches SW1 to SW4 respectively correspond to the plurality of valves 14A to 14D, which are provided on the plurality of respective coolant supply conduits 13A to 13D, which are connected to at least one of the plurality of nozzles 12. In a case where the replacement code selecting operation is not detected, the plurality of toggle switches SW1 to SW4 are provided such that at least one toggle switch corresponding to at least one open valve is oriented toward a first side and that a toggle switch corresponding to a valve other than the at least one open valve is oriented toward a second side opposite to the first side. In a case where the replacement code selecting operation is detected, the plurality of toggle switches SW1 to SW4 are provided such that at least one toggle switch corresponding to at least one valve specified to be opened by the selected replacement code is oriented toward the first side and that a toggle switch corresponding to a valve other than the at least one open valve is oriented toward the second side opposite to the first side. In the example illustrated in FIG. 6, the first side on the right side, and the second side is on the left side. This arrangement, however, may be the opposite. Also in the example illustrated in FIG. 6, coolant is being supplied at setting number 9 (coolant specifying code M105). Specifically, as the initial value, the plurality of toggle switches SW1 to SW4 are oriented toward the first side. Upon the touch panel detecting a change in orientation of at least one switch of the plurality of toggle switches SW1 to SW4, the processor 2P, which executes the coolant supply program 19, specifies, as a changed open valve, the valve corresponding to a toggle switch oriented toward the first side, and specifies, as a changed closed valve, the valve corresponding to a toggle switch oriented toward the second side. It is to be noted that in the following description, a toggle switch oriented toward the first side may be referred to as on-state toggle switch, and a toggle switch oriented toward the second side may be referred to as off-state toggle switch.

If the slider SL alone is operated, the processor 2P, which executes the coolant supply program 19, calculates the changed amount of jetting of coolant through each jetting nozzle per unit time and the changed power consumption of the pump 15P per unit time based on the changed degree of discharge and at least one open valve (or at least one valve specified to be opened by the selected replacement code). If at least one of the plurality of toggle switches SW1 to SW4 is operated, the processor 2P, which executes the coolant supply program 19, calculates the changed amount of jetting of coolant through each jetting nozzle per unit time and the changed power consumption of the pump 15P per unit time based on at least one changed open valve and the degree of discharge specified by the editing target code. If the slider SL and at least one of the plurality of toggle switches SW1 to SW4 are operated, the processor 2P, which executes the coolant supply program 19, calculates the changed amount of jetting of coolant through each jetting nozzle per unit time and the changed power consumption of the pump 15P per unit time based on at least one changed open valve and the changed degree of discharge. The changed amount of jetting can be calculated by a calculation method identical to the calculation method for the above-described amount of jetting. The changed power consumption can be calculated by a calculation method identical to the calculation method for the above-described power consumption.

The set power consumption indicator T7 indicates a ratio of the calculated changed power consumption of the pump 15P to the rated power consumption of the pump 15P. That is, the set power consumption indicator T7 displays a changed power consumption per unit time power by a scale of measurement identical to the scale of measurement for the consumption indicator T6. The set coolant amount indicator T8 indicates a ratio of the calculated changed amount of jetting to the amount of jetting of coolant through a nozzle empirically determined to be normally necessary and sufficient. That is, the set coolant amount indicator T8 displays a changed amount of jetting of coolant per unit time through each jetting nozzle by a scale of measurement identical to the scale of measurement for the coolant amount indicator T5. It is to be noted, however, that the set coolant amount indicator T8 may be an indicator that indicates the total amount of coolant jetted per unit time. For example, this indicator may indicate a ratio of the amount of discharge of coolant to a product of the necessary and sufficient amount of jetting per nozzle and the number of nozzles. 100% of the product is set to a maximum of the indicator. If the calculated amount of jetting exceeds the necessary and sufficient amount of jetting, all the set coolant amount indicators T8 show the maximum.

The machining region image IMG is a live image of the machining region (the region occupied by the plurality of raked floors 3F and the discharge opening 3E) as taken by a camera. The machining region image IMG may also be a picture of the machining region or a simple illustration by which valve positions and regions are recognizable. In FIG. 6, while the machining region image IMG shows reference signs corresponding to the regions A to D, these reference signs may not necessarily be shown over the machining region image IMG. Even if the slider SL and the plurality of toggle switches SW1 to SW4 at their initial values are operated, only the display of the set power consumption indicator T7 and the set coolant amount indicator T8 is changed; the actual discharge of coolant remains unchanged from the time before the slider SL and the plurality of toggle switches SW1 to SW4 are operated.

In this respect, upon the touch panel detecting a pressing of the setting application button BT1, the processor 2P, which executes the coolant supply program 19, temporarily switches the actual discharge of coolant to a discharge that is based on the coolant discharge parameter set at the slider SL and the plurality of toggle switches SW1 to SW4. It is to be noted that in the following description of the embodiment, when the processor 2P, which executes the coolant supply program 19, receives a signal from the touch panel indicating detection of a pressing of the setting application button BT1, this receiving may be referred to as receiving of a command to temporarily change coolant supply.

This temporary switch ends upon pressing of the setting release button BT2, ending of the coolant supply program 19, or progress of the execution of the machining program 2MP to release specifying of the current coolant specifying code. It is to be noted that in the following description of the embodiment, when the processor 2P, which executes the coolant supply program 19, receives a signal from the touch panel indicating detection of a pressing of the setting release button BT2, this receiving may be referred to as receiving of command to release temporary change in coolant supply. The ending of the coolant supply program 19 is intended to mean forced termination of processing of the coolant supply method. The progress of execution of the machining program 2MP to release specifying of the current coolant specifying code is intended to mean returning to the processing at step S11 illustrated in FIG. 5.

After pressing of the setting application button BT1, upon the touch panel detecting a pressing of the setting release button BT2, the processor 2P, which executes the coolant supply program 19, returns the actual discharge of coolant to a discharge that is based on a coolant discharge parameter stored in the coolant setting data 18 and correlated with the called code. Specifically, the actual discharge of coolant is returned to a state indicated by the jetting location T4, the coolant amount indicator T5, and the power consumption indicator T6. After pressing of the setting application button BT1, upon the touch panel detecting a pressing of the setting release button BT2, the orientations of the plurality of toggle switches SW1 to SW4, the position of the runner RUN of the slider SL, the set power consumption indicator T7, and the set coolant amount indicator T8 may be or may not necessarily be returned to respective initial states.

After detection of the replacement code selecting operation, upon the touch panel detecting a pressing of the program writing button BT3, the processor 2P, which executes the coolant supply program 19, rewrites the coolant specifying code (M code) specified in the machining program 2MP with a selected replacement code. After the coolant specifying code (M code) specified in the machining program 2MP has been rewritten, the original selected replacement code becomes a new called code. It is to be noted that the signal indicating a pressing of the program writing button BT3 and sent from the touch panel can be regarded as a command to replace the coolant specifying code with the replacement code. Accordingly, upon receipt of a command to replace the coolant specifying code with the replacement code while causing the pump 15P to discharge coolant by executing the machining program 2MP, the processor 2P, which executes the coolant supply program 19, may rewrite the machining program 2MP to call the selected replacement code in the machining program 2MP. Upon pressing of the program writing button BT3 without pressing of the setting application button BT1 after detection of the replacement code selecting operation, coolant is supplied based on the selected replacement code. However, upon pressing of the setting application button BT1 and then pressing of the program writing button BT3 after detection of the replacement code selecting operation, the discharge of coolant is not changed from the state set by the slider SL and the plurality of toggle switches SW1 to SW4.

After the slider SL and at least one of the plurality of toggle switches SW1 to SW4 have been operated, upon the touch panel detecting a pressing of the coolant discharge parameter update button BT4, the processor 2P, which executes the coolant supply program 19, rewrites information indicating the opening and/or closing of the plurality of valves 14 and information indicating the degree of discharge of coolant from the pump 15P that are among the coolant setting data 18 and correlated with the editing target code. The processor 2 performs this rewriting based on the changed open valve and the changed valve set by the plurality of toggle switches SW1 to SW4 and the changed supply amount set by the slider SL.

It is to be noted that the signal indicating a pressing of the coolant discharge parameter update button BT4 and sent from the touch panel can be regarded as a command to change the opening and/or closing of the plurality of valves 14. Accordingly, upon receipt of a command to change the opening and/or closing of the plurality of valves 14, the processor 2P, which executes the coolant supply program 19, may rewrite data that specifies the opening and/or closing of the plurality of valves 14 and that is associated with the editing target code to open the changed open valve and close the changed closed valve. In a case where the replacement code selecting operation is not detected, upon receipt of a command to change the opening and/or closing of the plurality of valves 14, the processor 2P, which executes the coolant supply program 19, may rewrite data that specifies the opening and/or closing of the plurality of valves 14 and that is associated with the called code to open the changed open valve and close the changed closed valve.

The signal indicating a pressing of the coolant discharge parameter update button BT4 and sent from the touch panel can be regarded as a command to change the degree of discharge. Accordingly, upon receipt of a command to change the degree of discharge, the processor 2P, which executes the coolant supply program 19, may rewrite the degree of discharge of coolant specified in the editing target code to the changed degree of discharge. In a case where the replacement code selecting operation is not detected, upon receipt of a command to change the degree of discharge, the processor 2P, which executes the coolant supply program 19, may rewrite the degree of discharge of coolant specified in the called code to the changed degree of discharge.

Upon rewriting of the coolant setting data 18, the display of the jetting location T4, the display of the coolant amount indicator T5, and the display of the power consumption indicator T6 that are related to the editing target code are respectively changed to a region corresponding to a valve corresponding to a switch, among the plurality of toggle switches SW1 to SW4, that is oriented toward the first side, a display identical to the set coolant amount indicator T8, and a display identical to the set power consumption indicator T7. Then, upon execution of the machining program 2MP and calling of the editing target code, based on the rewritten coolant setting data 18, at least one jetting nozzle through which coolant is to be jetted is specified and the amount of jetting of coolant is specified.

The above-described functions of the interface INT enable the user to press the setting application button BT1 to check the state of coolant supply set by the slider SL and the plurality of toggle switches SW1 to SW4 by looking at the machining region image IMG or the inside of the machine. In a case where the supply of coolant is determined to be insufficient, it is possible to correct the setting by pressing the setting release button BT2 and/or operating the slider SL and the plurality of toggle switches SW1 to SW4 again. In a case where the supply of coolant is determined to be sufficient, the user may press the coolant discharge parameter update button BT4 to rewrite the coolant setting data 18 corresponding to the called code. Once the coolant setting data 18 is rewritten, the corrected setting is applied every time the machining program 2MP is executed to machine similar products. That is, once the user has made an optimal coolant supply setting, this setting can be used continuously.

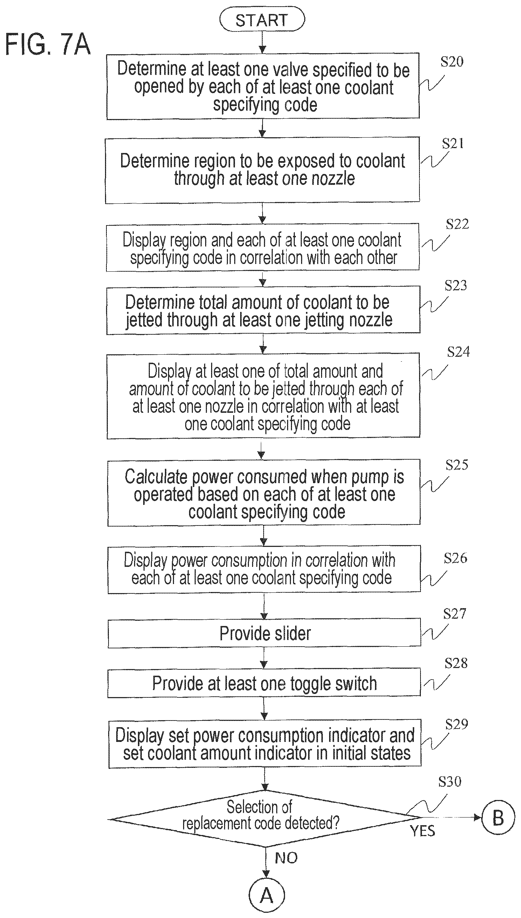

FIGs. 7A to 7E each are a flowchart of processing performed in a method of supplying coolant in the machine tool and setting performed on the interface INT illustrated in FIG. 6. The processings illustrated in FIGs. 7A to 7C are performed after the processing at step S13 illustrated in FIG. 5. At step S20, the processor 2P, which executes the coolant supply program 19, refers to the information indicating the opening and/or closing of the plurality of valves 14 correlated with the coolant specifying code (M code) to determine at least one valve 14, among the plurality of valves 14, that is specified to be opened by each of at least one coolant specifying code (M code). That is, while causing the pump 15P to discharge coolant by executing the machining program 2MP, the processor 2P, which executes the coolant supply program 19, determines at least one open valve 14, among the plurality of valves 14, that is specified to be opened by the called code. At step S21, the processor 2P, which executes the coolant supply program 19, determines a region to be exposed to coolant through at least one nozzle connected to the at least one valve. The processor 2P determines this region based on the coolant supply conduit 13 at which the at least one valve is provided. That is, the processor 2P, which executes the coolant supply program 19, determines a jetting region to be exposed to coolant jetted through at least one jetting nozzle connected to the at least one open valve.

At step S22, as indicated at the coolant specifying code (M code) T3 and the jetting location T4 illustrated in FIG. 6, the processor 2P, which executes the coolant supply program 19, displays each of at least one coolant specifying code and the region corresponding to the at least one coolant specifying code in a manner that correlates each of at least one coolant specifying code and the region. That is, the processor 2P, which executes the coolant supply program 19, displays the called code and the jetting region in a manner that correlates the called code and the jetting region.

At step S23, based on the number of at least one nozzle connected to at least one valve and based on information indicating the degree of discharge of coolant from the pump 15P specified by each of at least one coolant specifying code (M code), the processor 2P, which executes the coolant supply program 19, determines the total amount of coolant to be jetted through at least one jetting nozzle. That is, based on the degree of discharge of coolant specified by the called code, the processor 2P, which executes the coolant supply program 19, determines an amount of total jetting of coolant jetted through each of at least one jetting nozzle.

At step S24, as indicated at the coolant amount indicator T5 illustrated in FIG. 6, the processor 2P, which executes the coolant supply program 19, displays at least one of the total amount and the amount of coolant to be jetted through each of at least one nozzle in a manner that correlates the total amount or the amount of coolant with each of at least one coolant specifying code. That is, the processor 2P, which executes the coolant supply program 19, displays at least one of the amount of total jetting and the amount of individual jetting of coolant jetted through each of at least one jetting nozzle in a manner that correlates the total amount of jetting or the amount of individual jetting with each of at least one coolant specifying code.

At step S25, the processor 2P, which executes the coolant supply program 19, calculates the power consumed by the pump 15P when the pump 15P is operated based on the information indicating the degree of discharge of coolant from the pump 15P corresponding to each coolant specifying code. That is, the processor 2P, which executes the coolant supply program 19, calculates the power consumed by the pump 15P when the pump 15P is operated based on the information that indicates the degree of discharge of coolant from the pump 15P and that corresponds to the called code. At step S26, as indicated at the power consumption indicator T6 illustrated in FIG. 6, the processor 2P, which executes the coolant supply program 19, displays the power consumption of the pump 15P in a manner that correlates the power consumption and each of at least one coolant specifying code. That is, the processor 2P, which executes the coolant supply program 19, displays the power consumption of the pump 15P based on the called code in a manner that correlates the power consumption and the called code.

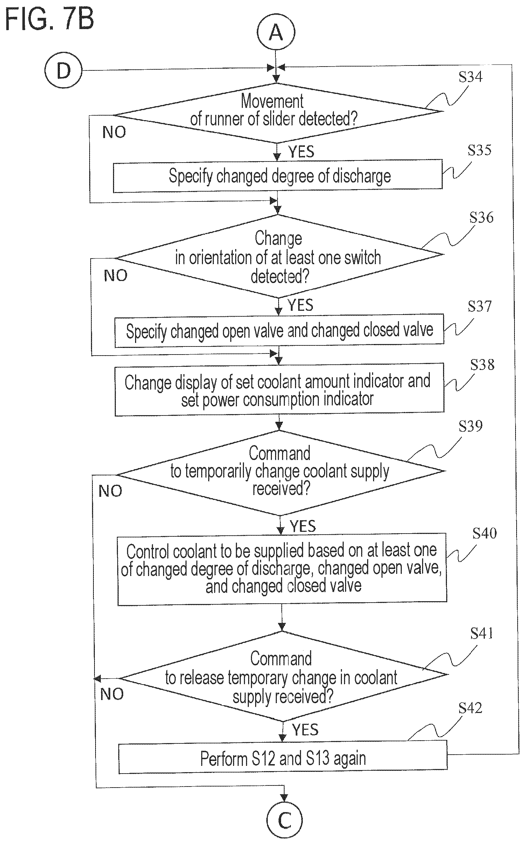

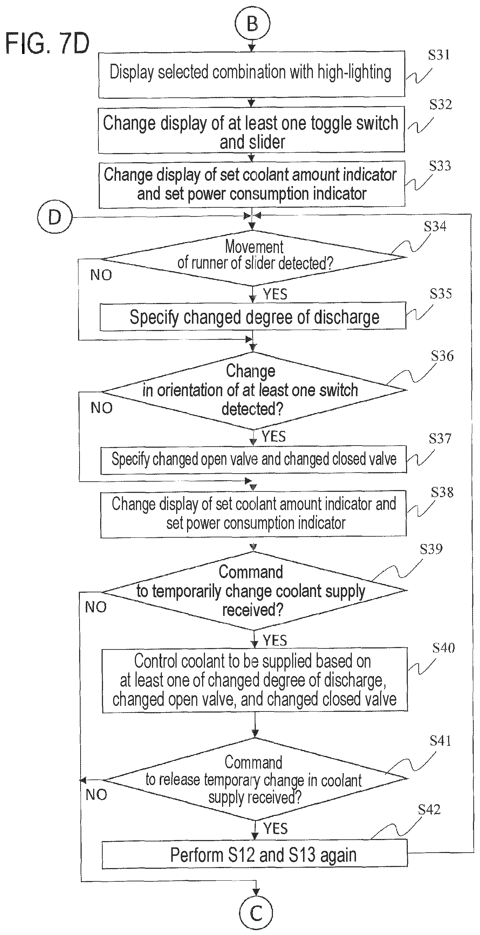

At step S27, as indicated at the slider SL illustrated in FIG. 6, the processor 2P, which executes the coolant supply program 19, provides the slider SL. The slider SL includes the indicator IND, which indicates the degree of discharge from the pump 15P specified by the called code, and the runner RUN, which is provided at the leading end portion of the indicator IND. At step S28, as indicated at the plurality of toggle switches SW1 to SW4 illustrated in FIG. 6, the processor 2P, which executes the coolant supply program 19, provides the plurality of toggle switches SW1 to SW4, which correspond to the plurality of respective valves 14. The plurality of toggle switches SW1 to SW4 are provided such that at least one toggle switch corresponding to at least one open valve is oriented toward the first side, and that a toggle switch corresponding to a valve other than the at least one open valve is oriented toward the second side opposite to the first side. At step S29, the processor 2P, which executes the coolant supply program 19, displays the set power consumption indicator T7 and the set coolant amount indicator T8 in their initial states identical to the initial states of the coolant amount indicator T5 and the power consumption indicator T6 that correspond to the called code. At step S30, the processor 2P, which executes the coolant supply program 19, determines whether selection of a replacement code has been detected. In a case where selection of a replacement code has not been detected (No at step S30), the procedure proceeds to step S34 illustrated in FIG. 7B. In a case where selection of a replacement code has been detected (Yes at step S30), the procedure proceeds to step S31 illustrated in FIG. 7D.

At step S34, the processor 2P, which executes the coolant supply program 19, determines whether a signal indicating a detection of a movement of the runner RUN has been received from the touch panel. In a case where a movement of the runner RUN has been detected (Yes at step S34), then at step S35, the processor 2P, which executes the coolant supply program 19, specifies the changed degree indicated by the indicator IND as a changed degree of discharge. In a case where no movement of the runner RUN has been detected (No at step S34), or upon ending of the processing at step S35, then at step S36, the processor 2P, which executes the coolant supply program 19, determines whether a signal indicating detection of a change in orientation of at least one switch of the plurality of toggle switches SW1 to SW4 has been received.

Upon detection of a change in orientation of at least one switch of the plurality of toggle switches SW1 to SW4 (Yes at step S36), then at step S37, the processor 2P, which executes the coolant supply program 19, specifies, as a changed open valve, the valve corresponding to a toggle switch oriented toward the first side, and specifies, as a changed closed valve, the valve corresponding to a toggle switch oriented toward the second side. In a case where no change in orientation of any switch has been detected (No at step S36), or upon ending of the processing at step S37, then at step S38, the processor 2P, which executes the coolant supply program 19, changes the display of the set power consumption indicator T7 and the set coolant amount indicator T8 based on the specified changed degree of discharge, the specified changed open valve, and the specified changed open valve.

At step S39, the processor 2P, which executes the coolant supply program 19, determines whether a command to temporarily change coolant supply has been received. Specifically, the processor 2P, which executes the coolant supply program 19, determines whether a signal from the touch panel indicating detection of a pressing of the setting application button BT1 has been received. In a case where no pressing of the setting application button BT1 has been detected (No at step S39), the procedure proceeds to step S43, described later. In a case where a pressing of the setting application button BT1 has been detected (Yes at step S39), then at step S40, the processor 2P, which executes the coolant supply program 19, controls coolant to be supplied based on the changed degree of discharge, the changed open valve, and the changed closed valve. It is to be noted that in a case where the setting application button BT1 has been pressed without operating the slider SL and the plurality of toggle switches SW1 to SW4, no change has been made in the changed degree of discharge, the changed open valve, and the changed closed valve. In this case, the supply of coolant is not changed at step S40.

At step S41, the processor 2P, which executes the coolant supply program 19, determines whether a command to release temporary change in coolant supply has been received. Specifically, the processor 2P, which executes the coolant supply program 19, determines whether a signal indicating detection of a pressing of the setting release button BT2 has been received from the touch panel. In a case where no pressing of the setting release button BT2 has been detected (No at step S41), the procedure proceeds to step S43, described later. In a case where the setting release button BT2 has been pressed (Yes at step S41), then at step S42, the processor 2P, which executes the coolant supply program 19, performs steps S12 and S13 again. After step S42 has been performed, the procedure returns to step S34. In a case where the slider SL and the plurality of toggle switches SW1 to SW4 are returned to their initial settings, the procedure may return to step S29.

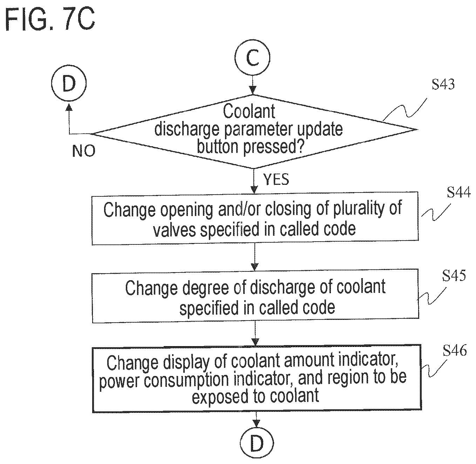

At step S43 illustrated in FIG. 7C, the processor 2P, which executes the coolant supply program 19, determines whether a command to change the degree of discharge/a command to change the opening and/or closing of the plurality of valves 14 have been received. That is, the processor 2P, which executes the coolant supply program 19, determines whether signal indicating a pressing of the coolant discharge parameter update button BT4 has been received. In a case where the coolant discharge parameter update button BT4 has not been pressed (No at step S43), the procedure returns to step S34. Upon receipt of a command to change the opening and/or closing of the plurality of valves 14 (Yes at step S43), then at step S44, the processor 2P, which executes the coolant supply program 19, rewrites data (the coolant setting data 18) that specifies the opening and/or closing of the plurality of valves 14 and that is associated with the called code to open the changed open valve and close the changed closed valve.

Upon receipt of a command to change the degree of discharge (Yes at step S43), then at step S45, the processor 2P, which executes the coolant supply program 19, rewrites the degree of discharge of coolant specified in the called code in the coolant setting data 18 to the changed degree of discharge. At step S46, the processor 2P, which executes the coolant supply program 19, changes the display of the jetting location T4, to which coolant is jetted, the display of the coolant amount indicator T5, and the display of the power consumption indicator T6 based on the changed open valve, the changed closed valve, and the changed degree of discharge. After completion of step S46, the procedure returns to step S34.

In a case where selection of a replacement code has been detected (Yes at step S30), then at step S31 illustrated in FIG. 7D, the processor 2P, which executes the coolant supply program 19, displays the combination associated with the selected replacement code with the high-lighting SEL. It is to be noted that the combination associated with the selected replacement code may be displayed with another high-lighting. At step S32, the display of the plurality of toggle switches SW1 to SW4 is changed such that at least one toggle switch corresponding to at least one valve specified to be opened by the selected replacement code is oriented toward the first side, and that a toggle switch corresponding to a valve other than the at least one open valve is oriented toward the second side opposite to the first side. The display of the indicator IND is changed to indicate the degree of discharge of coolant from the pump 15P as specified by the selected replacement code. At step S33, the processor 2P, which executes the coolant supply program 19, displays the set power consumption indicator T7 and the set coolant amount indicator T8 in a manner similar to the coolant amount indicator T5 and the power consumption indicator T6 that correspond to the selected replacement code.

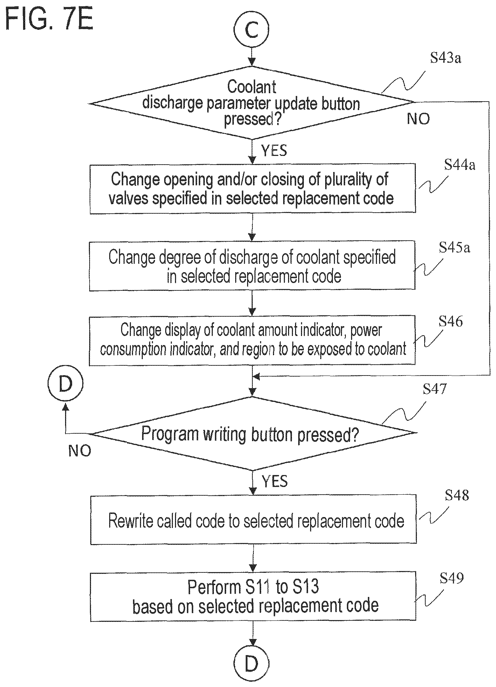

The processings of subsequent steps S34 to S42 are identical to the processings of steps S34 to S42 illustrated in FIG. 7B, and will not be elaborated upon further here. At step S43a illustrated in FIG. 7E, the processor 2P, which executes the coolant supply program 19, determines whether a command to change the degree of discharge/a command to change the opening and/or closing of the plurality of valves 14 have been received. That is, the processor 2P, which executes the coolant supply program 19, determines whether a signal indicating a pressing of the coolant discharge parameter update button BT4 has been received. In a case where the coolant discharge parameter update button BT4 has not been pressed (No at step S43a), the procedure proceeds to step S47. Upon receipt of a command to change the opening and/or closing of the plurality of valves 14 (Yes at step S43a), then at step S44a, the processor 2P, which executes the coolant supply program 19, rewrites data (the coolant setting data 18) that specifies the opening and/or closing of the plurality of valves 14 and that is associated with the selected replacement code to open the changed open valve and close the changed closed valve.

Upon receipt of a command to change the degree of discharge (Yes at step S43a), then at step S45a, the processor 2P, which executes the coolant supply program 19, rewrites the degree of discharge of coolant specified in the called code in the coolant setting data 18 to the changed degree of discharge. At step S46, the processor 2P, which executes the coolant supply program 19, changes the display of the jetting location T4, to which coolant is jetted, the display of the coolant amount indicator T5, and the display of the power consumption indicator T6 based on the changed open valve, the changed closed valve, and the changed degree of discharge.

At step S47, while causing the pump 15P to discharge coolant by executing the machining program 2MP, the processor 2P, which executes the coolant supply program 19, determines whether a command to replace the called code with a replacement code has been received. That is, the processor 2P, which executes the coolant supply program 19, determines whether a signal indicating a pressing of the program writing button BT3 has been received. In a case where the program writing button BT3 has not been pressed (No at step S47), the procedure returns to step S34. Upon receipt of a command to replace the called code with a replacement code while the machining program 2MP is being executed to cause the pump 15P to discharge coolant (Yes at step S47), then at step S48, the processor 2P, which executes the coolant supply program 19, rewrites the machining program 2MP to call the selected replacement code in the machining program 2MP. At step S49, the processor 2P, which executes the coolant supply program 19, performs steps S11 to S13 based on the selected replacement code.

<Change of Coolant Specifying Code while Executing Machining Program 2MP>

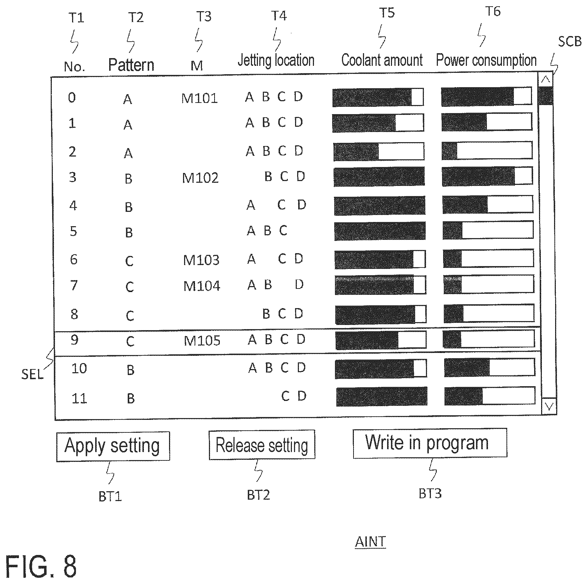

While executing the machining program 2MP, the user is able to not only change the opening and/or closing of the plurality of valves 14 and the degree of discharge of coolant but also change the coolant specifying code itself. In this respect, while executing the machining program 2MP, the processor 2P, which executes the coolant supply program 19, is configured to perform processing of displaying, on the control panel 2CP, an additional interface AINT illustrated in FIG. 8 to show an already registered coolant specifying code and replacement codes. Preferably, a window displaying the interface INT illustrated in FIG. 6 and a window displaying the additional interface AINT illustrated in FIG. 8 are both displayed on the touch panel display, and the interfaces are switched to each other by switching an active window between the windows. It is possible to use an additional display window switch interface to switch between the display of the window displaying the interface INT illustrated in FIG. 6 and the display of the window displaying the additional interface AINT illustrated in FIG. 8. It is also possible to display, together with the additional interface AINT, a machine coordinate screen for the spindle currently used for machining.

The additional interface AINT includes components identical to some components of the interface INT. In FIG. 8, such components are denoted with reference numerals identical to those of corresponding components of the interface INT, and will not be elaborated upon further here. The additional interface AINT includes a scroll bar SCB on a right edge of the additional interface AINT. The scroll bar SCB enables the user to scroll through combinations of the setting number T1, the pattern T2, the coolant specifying code (M code) T3, the jetting location T4, the coolant amount indicator T5, and the power consumption indicator T6.

The additional interface AINT displays, as initial setting, a called code-related combination with the high-lighting SEL. From this initial setting on, upon the touch panel detecting selection of an other combination, the selected combination is displayed with the high-lighting SEL. It is to be noted that upon selection of a combination with no coolant specifying code (M code) T3 specified, a pop-up window to input a coolant specifying code (M code) T3 is displayed, and that upon input of the coolant specifying code (M code) T3, this combination is displayed with the high-lighting SEL. It is also to be noted that the combination related to the currently implemented coolant specifying code and the combination related to the additionally selected coolant specifying code (selected replacement code) may be displayed in different colors of the high-lighting SEL.

Upon the touch panel detecting a pressing of the setting application button BT1 with the combination related to the replacement code selected, the processor 2P, which executes the coolant supply program 19, temporarily switches the setting related to the supply of coolant from setting based on the called code to setting based on the selected replacement code. That is, the processor 2P, which executes the coolant supply program 19, temporarily switches the actual discharge of coolant to a discharge that is based on a coolant discharge parameter specified by the selected replacement code. This temporary switch ends upon pressing of the setting release button BT2, ending of the coolant supply program 19, or progress of the execution of the machining program 2MP to release specifying of the called code. After pressing of the setting application button BT1, upon the touch panel detecting a pressing of the setting release button BT2, the processor 2P, which executes the coolant supply program 19, returns the setting related to the supply of coolant from the setting based on the selected replacement code to the setting based on the called code written in the machining program 2MP.

Upon the touch panel detecting a pressing of the program writing button BT3 with the combination related to the replacement code selected, the processor 2P, which executes the coolant supply program 19, rewrites the called code (M code) specified in the machining program 2MP with the selected replacement code. It is to be noted that the signal indicating a pressing of the program writing button BT3 and sent from the touch panel can be regarded as a command to replace the called code with a replacement code. Accordingly, upon receipt of a command to replace the called code with a replacement code while causing the pump 15P to discharge coolant by executing the machining program 2MP, the processor 2P, which executes the coolant supply program 19, may rewrite the machining program 2MP to call the selected replacement code in the machining program 2MP. Once the called code (M code) specified in the machining program 2MP is rewritten to the selected replacement code, the corrected setting is applied every time the machining program 2MP is executed to machine similar products. That is, once the user has made an optimal coolant supply setting, this setting can be used continuously.

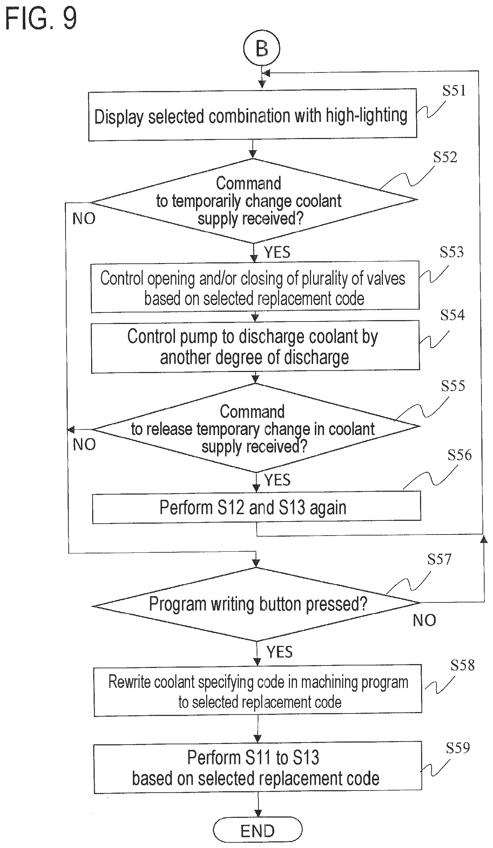

FIG. 9 is a flowchart of processing performed in the method of supplying coolant in the machine tool FIG. 8 and setting performed on the interface INT. The processing of display on the additional interface AINT is performed after the processing at step S13 illustrated in FIG. 5. It is to be noted that the processing associated with the display on the additional interface AINT is identical to the processing at steps S20 to S30, and will not be elaborated upon here. By referring to FIG. 9, processing performed subsequently after the YES processing at steps S20 to S30 will be described. At step S51, the processor 2P, which executes the coolant supply program 19, displays the combination associated with the selected replacement code with the high-lighting SEL.

At step S52, the processor 2P, which executes the coolant supply program 19, determines whether a command to temporarily change coolant supply has been received. Specifically, the processor 2P, which executes the coolant supply program 19, determines whether a signal from the touch panel indicating detection of a pressing of the setting application button BT1 has been received. In a case where no pressing of the setting application button BT1 has been detected (No at step S52), the procedure proceeds to step S57, described later. In a case where a pressing of the setting application button BT1 has been detected (Yes at step S52), then at step S53, the processor 2P, which executes the coolant supply program 19, controls the opening and/or closing of the plurality of valves 14 based on the selected replacement code. At step S54, the processor 2P, which executes the coolant supply program 19, controls the pump 15P to discharge coolant by the degree of discharge specified by the selected replacement code. It is to be noted that in a case where the setting application button BT1 has been pressed without selecting a replacement code, the supply of coolant at steps S53 and 54 remains unchanged.

At step S55, the processor 2P, which executes the coolant supply program 19, determines whether a command to release temporary change in coolant supply has been received. Specifically, the processor 2P, which executes the coolant supply program 19, determines whether a signal from the touch panel indicating detection of a pressing of the setting release button BT2 has been received. In a case where no pressing of the setting release button BT2 has been detected (No at step S55), the procedure proceeds to step S57, described later. In a case where the setting release button BT2 has been pressed (Yes at step S55), then at step S56, the processor 2P, which executes the coolant supply program 19, performs steps S12 and S13 again. After step S56 has been performed, the procedure returns to step S51.

At step S57, while causing the pump 15P to discharge coolant by executing the machining program 2MP, the processor 2P, which executes the coolant supply program 19, determines whether a command to replace the called code with a replacement code has been received. That is, the processor 2P, which executes the coolant supply program 19, determines whether a signal indicating a pressing of the program writing button BT3 has been received. In a case where the program writing button BT3 has not been pressed (No at step S57), the procedure returns to step S51. Upon receipt of a command to replace the called code with a replacement code while the machining program 2MP is being executed to cause the pump 15P to discharge coolant (Yes at step S57), then at step S58, the processor 2P, which executes the coolant supply program 19, rewrites the machining program 2MP to call the selected replacement code in the machining program 2MP. At step S59, the processor 2P, which executes the coolant supply program 19, performs steps S11 to S13 based on the selected replacement code rewritten in the machining program 2MP.

<Features and Effects of Method According to the Embodiment of Supplying Coolant>

The method according to this embodiment of supplying coolant includes reading, from the machining program 2MP, a called code included in the coolant specifying codes for specifying the opening and/or closing of the plurality of valves 14, which are provided on the plurality of respective coolant supply conduits 13, which are connected to the plurality of nozzles 12, which are mounted on the machine tool 1, and for specifying the degree of discharge of coolant from the pump 15P, which supplies coolant to the plurality of nozzles 12. The method also includes controlling the opening and/or closing of the plurality of valves 14 based on the called code, and controlling the pump 15P to discharge coolant by the degree of discharge based on the called code. With this configuration, the method of supplying coolant simplifies the user operation of switching between coolant jetting nozzles and between degrees of coolant discharge in coordination with the machining program 2MP.

The method of supplying the coolant displays the jetting location T4, to which coolant is jetted through at least one jetting nozzle connected to at least one open valve among the plurality of valves 14 while the pump 15P is being caused to discharge coolant by executing the machining program 2MP. The method also displays at least one of the amount of total jetting of coolant through at least one jetting nozzle and the amount of individual jetting of coolant through each of the at least one jetting nozzle. The method provides the slider SL and the plurality of toggle switches SW1 to SW4. With this configuration, the method of supplying coolant facilitates the changing of coolant jetting nozzles and degrees of coolant discharge while the machining program 2MP is being executed.

<Modifications>

In the above-described embodiment, the slider SL, the plurality of toggle switches SW1 to SW4, the setting application button BT1, the setting release button BT2, and the program writing button BT3 are described as interfaces on the touch panel. The slider, the switches, and the buttons, however, may respectively be a (tangible) slider, (tangible) toggle switches, and (tangible) buttons on the control panel 2CP. In a case where the slider SL is a tangible slider, the control panel 2CP includes a position sensor that detects a movement of the runner RUN. In a case where the plurality of toggle switches SW1 to SW4 are tangible toggle switches, the control panel 2CP includes an electric/electromagnetic switch or a position sensor that detects a movement of each switch. The setting application button BT1, the setting release button BT2, and the program writing button BT3 each include an electric/electromagnetic switch that detects a pressing of each button. These position sensors and electric/electromagnetic switches operate to implement the functions performed on the above-described touch panel. Also in the above-described embodiment, the interface INT displays, in a correlated manner, the setting number T1, the pattern T2, the coolant specifying code (M code) T3, the jetting location T4, the coolant amount indicator T5, and the power consumption indicator T6, which are for identifying a combination of the coolant specifying code and the coolant discharge parameter. Insofar as the coolant specifying code (M code) T3 and at least one of the jetting location T4, the coolant amount indicator T5, and the power consumption indicator T6 are displayed, the rest may be omitted.

The above-described embodiment is regarding a case where the degree of discharge of coolant is the output of the pump 15P, that is, the rotational speed or operation frequency of the pump 15P. The degree of discharge of coolant, however, may be the amount of discharge from the pump 15P. In this case, the coolant supplier 10 may include flow rate sensors 16A to 16D, as indicated by dotted lines illustrated in FIG. 2. The flow rate sensors 16A to 16D are provided at the plurality of respective coolant supply conduits 13A to 13D. Signals from the flow rate sensors 16A to 16D are fed back to the numerical controller 2. The processor 2P, which is provided in the numerical controller 2 and executes the coolant supply program 19, calculates the amount of discharge from the pump 15P based on the signals from the flow rate sensors 16A to 16D, and transmits a control signal to the inverter 15I to make the amount of discharge from the pump 15P a target amount. In this manner, the processor 2P, which executes the coolant supply program 19, controls the amount of discharge from the pump 15P. It is possible to perform feedback control of the amount of discharge from the pump 15P by providing a flow rate sensor only at a supply conduit, among the plurality of coolant supply conduits 13A to 13D, through which coolant continually flows, and estimating the amount of discharge from the pump 15P based on a signal from this flow rate sensor.

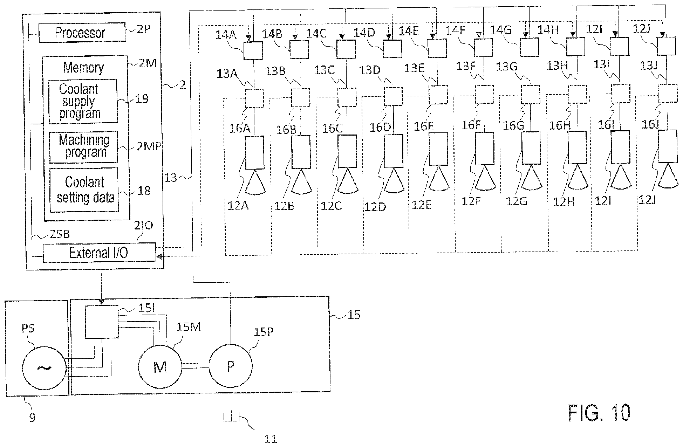

A plurality of valves 14 may be provided at the plurality of respective nozzles 12. FIG. 10 is a block diagram of a hardware configuration of a machine tool 1 according to a modification employing such configuration. In this modification, a plurality of coolant supply conduits 13A to 13J are provided through which coolant is sent to the plurality of respective nozzles 12A to 12J from the pump 15P. Also, a plurality of valves 14A to 14J are provided at the plurality of respective coolant supply conduits 13A to 13J. Based on the opening and/or closing of each of the plurality of valves 14A to 14J, a determination is made as to whether to jet coolant through each of the plurality of nozzles 12A to 12J. It is to be noted that flow rate sensors 16A to 16J may be provided at the plurality of respective coolant supply conduits 13A to 13J, as in the above-described embodiment.

In the present application, the term "comprise" and its variations are intended to mean open-ended terms, not excluding any other elements and/or components that are not recited herein. The same applies to the terms "include", "have", and their variations.

Also in the present application, a component suffixed with a term such as "member", "portion", "part", "element", "body", and "structure" is intended to mean that there is a single such component or a plurality of such components.

Also in the present application, ordinal terms such as "first" and "second" are merely used for distinguishing purposes and there is no other intention (such as to connote a particular order) in using ordinal terms. For example, the mere use of "first element" does not connote the existence of "second element"; otherwise, the mere use of "second element" does not connote the existence of "first element".

In the present disclosure, approximating language such as "approximately", "about", and "substantially" may be applied to correct any quantitative representation that could permissibly vary without a significant change in the final result obtained. All of the quantitative representations recited in the present application shall be construed to be modified by approximating language such as "approximately", "about", and "substantially".

Also in the present application, the phrase "at least one of A and B" is intended to be interpreted as "only A", "only B", or "both A and B".

Obviously, numerous modifications and variations of the present invention are possible in light of the above teachings. It is therefore to be understood that within the scope of the appended claims, the present invention may be practiced otherwise than as specifically described herein.

**Claims**

1. A method of supplying a coolant to a machine tool (1), the method comprising:

   reading (S11), from a machining program (19), a called code of at least one coolant specifying code, each of the at least one coolant specifying code being to specify to open or close of a plurality of valves (14, 14A - 14D) provided in a plurality of coolant supply conduits (13, 13A - 13D), respectively, the plurality of coolant supply conduits (13, 13A - 13D) being provided in the machine tool (1) to be connected to a plurality of nozzles (12, 12A - 12D), each of the at least one coolant specifying code being to specify a degree of discharge of the coolant from a pump (15) to the plurality of nozzles (12, 12A - 12D);
   controlling (S12) the opening and closing of the plurality of valves (14, 14A - 14D) based on the called code;
   controlling (S13) the pump (15) to discharge the coolant by the degree of discharge based on the called code;
   determining (S20) at least one valve among the plurality of valves (14, 14A - 14D) which is specified to be opened by the each of the at least one coolant specifying code;
   determining (S21) a region to be exposed to the coolant jetted through at least one nozzle (12, 12A - 12D) of the plurality of nozzles (12, 12A - 12D) which is connected to the at least one valve;
   displaying (S22) the each of the at least one coolant specifying code and the region corresponding to the each of the at least one coolant specifying code in a manner that correlates the each of the at least one coolant specifying code and the region;
   determining (S23) a total amount of the coolant to be jetted through the at least one nozzle (12, 12A - 12D) based on the degree of discharge of the coolant specified by the each of the at least one coolant specifying code; and
   displaying (S24) at least one of the total amount and an amount of the coolant to be jetted through each of the at least one nozzle (12, 12A - 12D) in a manner that correlates the each of the at least one coolant specifying code and the at least one of the total amount and the amount of the coolant.

2. The method of supplying the coolant, according to claim 1, further comprising displaying (S26) power consumption of the pump (15) to be operated based on the each of the at least one coolant specifying code in a manner that correlates the each of the at least one coolant specifying code and the power consumption.

3. The method of supplying the coolant, according to claim 1 or 2, further comprising:

   when determining (S20) the at least one valve, determining (S20) at least one open valve of the plurality of valves (14, 14A - 14D) which has been opened as specified by the called code while the coolant is discharged from the pump (15) on execution of the machining program (19);
   when determining (S21) the region to be exposed, determining (S21) a jetting region to be exposed to the coolant jetted through at least one jetting nozzle of the plurality of nozzles (12, 12A - 12D) which is connected to the at least one open valve;
   determining (S23) a total jetting amount as the total amount of the coolant jetted through the at least one jetting nozzle based on the degree of discharge of the coolant specified by the called code;
   displaying (S24) the jetting region and at least one of the total jetting amount and an individual jetting amount of the coolant jetted through each of the at least one jetting nozzle; and

upon receipt of a command to change the opening and closing of the plurality of valves (14, 14A - 14D), rewriting (S44) data of the called code to specify to open or close each of the plurality of valves (14, 14A - 14D) such that the data is to specify to open a changed open valve and close a changed closed valve.

4. The method of supplying the coolant, according to claim 3, further comprising:

providing a plurality of toggle switches (SW1 - SW4) respectively corresponding to the plurality of valves (14, 14A - 14D) such that at least one toggle switch (SW1 - SW4) is oriented toward a first side and another of the plurality of toggle switches (SW1 - SW4) is oriented toward a second side opposite to the first side, the at least one toggle switch (SW1 - SW4) corresponding to the at least one open valve, the other of the plurality of toggle switches (SW1 - SW4) corresponding to another of the plurality of valves (14, 14A - 14D) other than the at least one open valve; and

upon detection of a change in orientation of at least one toggle switch (SW1 - SW4) of the plurality of toggle switches (SW1 - SW4),

specifying (S36), as the changed open valve, a valve corresponding to the toggle switch (SW1 - SW4) an orientation of which has been changed toward the first side; and

specifying (S37), as the changed closed valve, a valve corresponding to the toggle switch (SW1 - SW4) an orientation of which has been changed toward the second side.

5. The method of supplying the coolant, according to any one of claims 1 to 4, further comprising:

when determining (S20) the at least one valve, determining (S20) at least one open valve of the plurality of valves (14, 14A - 14D) that has been opened as specified by the called code while the coolant is being discharged from the pump (15) by executing the machining program (19);

when determining (S21) the region to be exposed, determining (S21) a jetting region to be exposed to the coolant jetted through at least one jetting nozzle of the plurality of nozzles (12, 12A - 12D) that is connected to the at least one open valve;

determining (S23) a total jetting amount as the total amount of the coolant jetted through the at least one jetting nozzle based on the degree of discharge of the coolant specified by the called code;

displaying (S24) the jetting region and at least one of the total jetting amount and an individual jetting amount of the coolant jetted through each of the at least one jetting nozzle; and

upon receipt of a command to change the degree of discharge, rewriting (S45) the degree of discharge of the coolant specified by the called code to a changed degree of discharge.

6. The method of supplying the coolant, according to claim 5, further comprising:

providing a slider (SL) comprising:

an indicator (IND) configured to indicate the degree of discharge from the pump (15) specified by the called code; and

a runner (RUN) provided at a leading end portion of the indicator (IND); and

specifying, as the changed degree of discharge, a changed degree indicated by the indicator (IND) upon detection of a movement of the runner (RUN).

7. The method of supplying the coolant, according to any one of claims 1 to 6, further comprising, upon receipt of a command to replace the called code with a replacement code other than the called code among the at least one coolant specifying code while the coolant is being discharged from the pump (15) by executing the machining program (19), rewriting (S48) the machining program (19) to call the replacement code in the machining program (19).

8. The method of supplying the coolant, according to any one of claims 1 to 7, wherein specifying the degree of discharge of the coolant comprises specifying an output of the pump (15).

9. The method of supplying the coolant, according to claim 8, wherein the output of the pump (15) is indicated by a rotational speed of the pump (15) or an operation frequency of the pump (15).

10. The method of supplying the coolant, according to any one of claims 1 to 9, wherein a wide-area control valve of the plurality of valves (14, 14A - 14D) is provided at a coolant supply conduit of the plurality of coolant supply conduits (13, 13A - 13D) that is connected to two or more divisional nozzles among the plurality of nozzles (12, 12A - 12D).

11. The method of supplying the coolant, according to claim 10, wherein a region to be exposed to the coolant jetted through the two or more divisional nozzles corresponds to one section among a plurality of sections that are obtained by dividing a machining region of the machine tool (1).

12. A program (19) comprising instructions which, when the program (19) is executed by a hardware processor (2P), cause the hardware processor (2P) to carry out the method of supplying the coolant according to any one of claims 1 to 11.

13. A coolant supplier (10) comprising:

    a storage medium in which the program (19) according to claim 12 is installed;
    the pump (15);
    a coolant tank (11) connected to the pump (15) and configured to store the coolant;
    the plurality of nozzles (12, 12A - 12D);
    a plurality of coolant supply conduits (13, 13A - 13D) connecting the plurality of respective nozzles (12, 12A - 12D) to the pump (15); and
    a plurality of valves (14, 14A - 14D) provided at the plurality of respective coolant supply conduits (13, 13A - 13D).

14. A machine tool (1) comprising:

    the coolant supplier (10) according to claim 13;
    a hardware processor (2P); and
    a memory (2M),
    the program (19) being installed in the memory (2M) and executed by the hardware processor (2P).

**Patentansprüche**

1. Verfahren zum Zuführen eines Kühlmittels zu einer Werkzeugmaschine (1), wobei das Verfahren umfasst:

    Auslesen (S11) eines aufgerufenen Codes von mindestens einem Kühlmittelspezifizierungscode aus einem Bearbeitungsprogramm (19), wobei jeder des mindestens einen Kühlmittelspezifizierungscodes dazu dient, das Öffnen oder Schließen einer Vielzahl von Ventilen (14, 14A - 14D) zu spezifizieren, die jeweils in einer Vielzahl von Kühlmittelzufuhrleitungen (13, 13A - 13D) bereitgestellt sind, wobei die Vielzahl von Kühlmittelzufuhrleitungen (13, 13A - 13D) in der Werkzeugmaschine (1) bereitgestellt sind, um mit einer Vielzahl von Düsen (12, 12A - 12D) verbunden zu sein, wobei jeder des mindestens einen Kühlmittelspezifizierungscodes dazu dient, eine Ausmaß einer Abgabe des Kühlmittels von einer Pumpe (15) an die Vielzahl von Düsen (12, 12A - 12D) zu spezifizieren;
    Steuern (S12) des Öffnens und Schließens der Vielzahl von Ventilen (14, 14A - 14D) auf der Grundlage des aufgerufenen Codes;
    Steuern (S13) der Pumpe (15) zum Abgeben des Kühlmittels nach dem Abgabeausmaß auf der Grundlage des aufgerufenen Codes;
    Bestimmen (S20) mindestens eines Ventils aus der Vielzahl von Ventilen (14, 14A - 14D), das durch jeden des mindestens einen Kühlmittelspezifizierungscodes zum Öffnen spezifiziert ist;
    Bestimmen (S21) eines Bereichs, der dem Kühlmittel ausgesetzt werden soll, das durch mindestens eine Düse (12, 12A - 12D) aus der Vielzahl von Düsen (12, 12A - 12D), die mit dem mindestens einen Ventil verbunden ist, ausgestoßen wird;
    Anzeigen (S22) jedes des mindestens einen Kühlmittelspezifizierungscodes und dem Bereich, der jedem des mindestens einen Kühlmittelspezifizierungscodes entspricht, in einer Weise, die jeden des mindestens einen Kühlmittelspezifizierungscodes und den Bereich in Korrelation bringt;
    Bestimmen (S23) einer Gesamtmenge des durch die mindestens eine Düse (12, 12A - 12D) auszustoßenden Kühlmittels auf der Grundlage des Abgabeausmaßes des Kühlmittels, der durch jeden des mindestens einen Kühlmittelspezifizierungscodes spezifiziert wird; und
    Anzeigen (S24) der Gesamtmenge und/oder einer Menge des Kühlmittels, das durch jede der mindestens einen Düse (12, 12A - 12D) in einer Weise auszustoßen ist, die jeden des mindestens einen Kühlmittelspezifizierungscodes und die Gesamtmenge und/oder die Menge des Kühlmittels in Korrelation bringt.

2. Verfahren zum Zuführen des Kühlmittels, gemäß Anspruch 1, das ferner das Anzeigen (S26) des Stromverbrauchs der zu betreibenden Pumpe (15) auf der Grundlage jedes des mindestens einen Kühlmittelspezifizierungscodes in einer Weise umfasst, die jeden des mindestens einen Kühlmittelspezifizierungscodes und den Stromverbrauch in Korrelation bringt.

3. Verfahren zum Zuführen des Kühlmittels, gemäß Anspruch 1 oder 2, ferner umfassend:

beim Bestimmen (S20) des mindestens einen Ventils, Bestimmen (S20) mindestens eines offenen Ventils aus der Vielzahl von Ventilen (14, 14A - 14D), das spezifiziert durch den aufgerufenen Code geöffnet wurde, während das Kühlmittel von der Pumpe (15) bei der Ausführung des Bearbeitungsprogramms (19) abgegeben wird;
beim Bestimmen (S21) des freizulegenden Bereichs, Bestimmen (S21) eines Ausstoßbereichs, der dem Kühlmittel ausgesetzt werden soll, das durch mindestens eine Ausstoßdüse aus der Vielzahl von Düsen (12, 12A - 12D), die mit dem mindestens einen offenen Ventil verbunden ist, ausgestoßen wird;
Bestimmen (S23) einer Gesamtmenge des Kühlmittels, die durch die mindestens eine Ausstoßdüse auszustoßen ist, auf der Grundlage des durch den aufgerufenen Code spezifizierten Abgabeausmaßes des Kühlmittels;
Anzeigen (S24) des Ausstoßbereichs und der gesamten Ausstoßmenge und/oder einer individuellen Ausstoßmenge des durch jede der mindestens einen Ausstoßdüse ausgestoßenen Kühlmittels; und
auf den Empfang eines Befehls zum Ändern des Öffnens und Schließens der Vielzahl von Ventilen hin (14, 14A - 14D), Umschreiben (S44) von Daten des aufgerufenen Codes, um das Öffnen oder Schließen jedes der Vielzahl von Ventilen (14, 14A - 14D) derart zu spezifizieren, dass die Daten das Öffnen eines geänderten offenen Ventils und das Schließen eines geänderten geschlossenen Ventils spezifizieren.

4. Verfahren zum Zuführen des Kühlmittels, gemäß Anspruch 3, ferner umfassend:

Bereitstellen einer Vielzahl von Kippschaltern (SW1 - SW4), die jeweils der Vielzahl von Ventilen (14, 14A - 14D) entsprechen, so dass mindestens ein Kippschalter (SW1 - SW4) zu einer ersten Seite hin ausgerichtet ist und ein anderer der Vielzahl von Kippschaltern (SW1 - SW4) zu einer zweiten Seite hin ausgerichtet ist, die der ersten Seite gegenüberliegt, wobei der mindestens eine Kippschalter (SW1 - SW4) dem mindestens einen offenen Ventil entspricht, der andere aus der Vielzahl der Kippschalter (SW1 - SW4) einem anderen aus der Vielzahl von Ventilen (14, 14A - 14D) als dem mindestens einen offenen Ventil entspricht; und
bei Erkennen einer Ausrichtungsänderung mindestens eines Kippschalters (SW1 - SW4) aus der Vielzahl der Kippschalter (SW1 - SW4),

Spezifizieren (S36) eines Ventils als das geänderte offene Ventil, das dem Kippschalter (SW1 - SW4) entspricht, dessen Ausrichtung zu der ersten Seite hin geändert wurde; und
Spezifizieren (S37) eines Ventils als das geänderte geschlossene Ventil, das dem Kippschalter (SW1 - SW4) entspricht, dessen Ausrichtung zu der zweiten Seite hin geändert wurde.

5. Verfahren zum Zuführen des Kühlmittels, gemäß einem der Ansprüche 1 bis 4, ferner umfassend:

beim Bestimmen (S20) des mindestens einen Ventils, Bestimmen (S20) mindestens eines offenen Ventils aus der Vielzahl von Ventilen (14, 14A - 14D), das spezifiziert durch den aufgerufenen Code geöffnet wurde, während das Kühlmittel von der Pumpe (15) durch Ausführen des Bearbeitungsprogramms (19) abgegeben wird;
beim Bestimmen (S21) des freizulegenden Bereichs, Bestimmen (S21) eines Ausstoßbereichs, der dem Kühlmittel ausgesetzt werden soll, das durch mindestens eine Ausstoßdüse aus der Vielzahl von Düsen (12, 12A - 12D), die mit dem mindestens einen offenen Ventil verbunden ist, ausgestoßen wird;
Bestimmen (S23) einer Gesamtmenge des Kühlmittels, die durch die mindestens eine Ausstoßdüse auszustoßen ist, auf der Grundlage des durch den aufgerufenen Code spezifizierten Abgabeausmaßes des Kühlmittels;
Anzeigen (S24) des Ausstoßbereichs und der gesamten Ausstoßmenge und/oder einer individuellen Ausstoßmenge des durch jede der mindestens einen Ausstoßdüse ausgestoßenen Kühlmittels; und
auf den Empfang eines Befehls zur Änderung des Abgabeausmaßes hin, Umschreiben (S45) des durch den aufgerufenen Code spezifizierten Abgabeausmaßes des Kühlmittels auf ein geändertes Abgabeausmaß.

6. Verfahren zum Zuführen des Kühlmittels, gemäß Anspruch 5, ferner umfassend:

Bereitstellen eines Schiebereglers (SL), umfassend:

> einen Indikator (IND), der konfiguriert ist, um das durch den aufgerufenen Code spezifizierte Abgabeausmaß der Pumpe (15) anzugeben; und
> einen Schieber (RUN), der an einem vorderen Endabschnitt des Indikators (IND) bereitgestellt ist; und

> Spezifizieren, als das geänderte Abgabeausmaß, eines geänderten Ausmaßes, das durch den Indikator (IND) bei Erkennung einer Bewegung des Schiebers (RUN) angegeben wird.

**7.** Verfahren zum Zuführen des Kühlmittels, gemäß einem der Ansprüche 1 bis 6, ferner umfassend: auf den Empfang eines Befehls zum Ersetzen des aufgerufenen Codes durch einen anderen Ersatzcode als den aufgerufenen Code unter dem mindestens einen Kühlmittelspezifizierungscode hin, während das Kühlmittel von der Pumpe (15) durch Ausführen des Bearbeitungsprogramms (19) abgegeben wird, Umschreiben (S48) des Bearbeitungsprogramms (19), um den Ersatzcode in dem Bearbeitungsprogramm (19) aufzurufen.

**8.** Verfahren zum Zuführen des Kühlmittels, gemäß einem der Ansprüche 1 bis 7, wobei das Spezifizieren des Abgabeausmaßes des Kühlmittels das Spezifizieren einer Leistung der Pumpe (15) umfasst.

**9.** Verfahren zum Zuführen des Kühlmittels, gemäß Anspruch 8, wobei die Leistung der Pumpe (15) durch eine Drehzahl der Pumpe (15) oder eine Betriebsfrequenz der Pumpe (15) angegeben ist.

**10.** Verfahren zum Zuführen des Kühlmittels, gemäß einem der Ansprüche 1 bis 9, wobei ein Weitbereichs-Steuerventil aus der Vielzahl von Ventilen (14, 14A - 14D) an einer Kühlmittelzufuhrleitung aus der Vielzahl von Kühlmittelzufuhrleitungen (13, 13A - 13D) bereitgestellt ist, die mit zwei oder mehreren Abschnitts-Düsen aus der Vielzahl von Düsen (12, 12A - 12D) verbunden ist.

**11.** Verfahren zum Zuführen des Kühlmittels, gemäß Anspruch 10, wobei ein Bereich, der dem durch die zwei oder mehr Abschnitts-Düsen ausgestoßenen Kühlmittel ausgesetzt werden soll, einem Abschnitt aus einer Vielzahl von Abschnitten entspricht, die durch Unterteilung eines Bearbeitungsbereichs der Werkzeugmaschine (1) erhalten werden.

**12.** Programm (19) umfassend Befehle, die, wenn das Programm (19) von einem Hardware-Prozessor (2P) ausgeführt wird, den Hardware-Prozessor (2P) veranlassen, das Verfahren zum Zuführen des Kühlmittels gemäß einem der Ansprüche 1 bis 11 auszuführen.

**13.** Kühlmittelzufuhreinrichtung (10), umfassend:

> ein Speichermedium, in dem das Programm (19) gemäß Anspruch 12 installiert ist;
> die Pumpe (15);
> einen Kühlmittelbehälter (11), der mit der Pumpe (15) verbunden und zum Speichern des Kühlmittels konfiguriert ist;
> die Vielzahl von Düsen (12, 12A - 12D);
> eine Vielzahl von Kühlmittelzufuhrleitungen (13, 13A - 13D), die die Vielzahl der jeweiligen Düsen (12, 12A - 12D) mit der Pumpe (15) verbinden; und
> eine Vielzahl von Ventilen (14, 14A - 14D), die an der Vielzahl der jeweiligen Kühlmittelzufuhrleitungen (13, 13A - 13D) angebracht sind.

**14.** Werkzeugmaschine (1) umfassend:

> die Kühlmittelzufuhreinrichtung (10) gemäß Anspruch 13;
> einen Hardware-Prozessor (2P); und
> einen Speicher (2M),
> wobei das Programm (19) im Speicher (2M) installiert und vom Hardware-Prozessor (2P) ausgeführt wird.

**Revendications**

**1.** Procédé d'alimentation en liquide de refroidissement d'une machine-outil (1), le procédé comprenant :

lire (S11), à partir d'un programme d'usinage (19), un code appelé d'au moins un code de spécification de liquide de refroidissement, chacun dudit au moins un code de spécification de liquide de refroidissement étant destiné à spécifier l'ouverture ou la fermeture d'une pluralité de vannes (14, 14A - 14D) prévues respectivement dans une pluralité de conduits d'alimentation en liquide de refroidissement (13, 13A - 13D), la pluralité de conduits d'alimentation en liquide de refroidissement (13, 13A - 13D) étant prévue dans la machine-outil (1) pour être reliée à une pluralité de buses (12, 12A - 12D), chacun dudit au moins un code de spécification de liquide de refroidissement étant destiné à spécifier un degré de décharge du liquide de refroidissement à partir d'une pompe (15) vers la pluralité de buses (12, 12A - 12D) ;

commander (S12) l'ouverture et la fermeture de la pluralité de vannes (14, 14A - 14D) basé sur le code appelé ;

commander (S13) la pompe (15) pour décharger le liquide de refroidissement par le degré de décharge basé sur le code appelé ;

déterminer (S20) au moins une vanne parmi la pluralité de vannes (14, 14A - 14D) qui est spécifiée pour être ouverte par chacun dudit au moins un code de spécification de liquide de refroidissement ;

déterminer (S21) une région à exposer au liquide de refroidissement projeté à travers au moins une buse (12, 12A - 12D) de la pluralité de buses (12, 12A - 12D) qui est reliée à ladite au moins une vanne ;

afficher (S22) chacun dudit au moins un code de spécification de liquide de refroidissement et la région correspondant à chacun dudit au moins un code de spécification de liquide de refroidissement de manière à établir une corrélation entre chacun dudit au moins un code de spécification de liquide de refroidissement et la région ;

déterminer (S23) une quantité totale de liquide de refroidissement à projeter à travers ladite au moins une buse (12, 12A - 12D) basé sur le degré de décharge du liquide de refroidissement spécifié par chacun dudit au moins un code de spécification de liquide de refroidissement ; et

afficher (S24) au moins une parmi la quantité totale et la quantité de liquide de refroidissement à projeter à travers chacune de ladite au moins une buse (12, 12A - 12D) de manière à établir une corrélation entre chacun dudit au moins un code de spécification de liquide de refroidissement et au moins une parmi la quantité totale et la quantité de liquide de refroidissement.

2.  Procédé d'alimentation en liquide de refroidissement selon la revendication 1, comprenant en outre l'affichage (S26) de la consommation d'énergie de la pompe (15) à faire fonctionner basé sur chacun dudit au moins un code de spécification de liquide de refroidissement de manière à établir une corrélation entre chacun dudit au moins un code de spécification de liquide de refroidissement et la consommation d'énergie.

3.  Procédé d'alimentation en liquide de refroidissement, selon la revendication 1 ou 2, comprenant en outre :

lors de la détermination (S20) de ladite au moins une vanne, déterminer (S20) au moins une vanne ouverte de la pluralité de vannes (14, 14A - 14D) qui a été ouverte comme spécifié par le code appelé pendant que le liquide de refroidissement est déchargé de la pompe (15) lors de l'exécution du programme d'usinage (19) ;

lors de la détermination (S21) de la région à exposer, déterminer (S21) une région de projection à exposer au liquide de refroidissement projeté à travers au moins une buse de projection de la pluralité de buses (12, 12A - 12D) qui est reliée à ladite au moins une vanne ouverte ;

déterminer (S23) une quantité de projection totale en tant que quantité totale de liquide de refroidissement projetée à travers ladite au moins une buse de projection basé sur le degré de décharge du liquide de refroidissement spécifié par le code appelé ;

afficher (S24) la région de projection et au moins une parmi la quantité totale de projection et une quantité individuelle de projection du liquide de refroidissement projeté à travers chacune de ladite moins une buse de projection ; et

à la réception d'une commande de modification de l'ouverture et de la fermeture de la pluralité de vannes (14, 14A - 14D), réécrire (S44) des données du code appelé pour spécifier l'ouverture ou la fermeture de chacune de la pluralité de vannes (14, 14A - 14D) de telle sorte que les données spécifient l'ouverture d'une vanne ouverte modifiée et la fermeture d'une vanne fermée modifiée.

4.  Procédé d'alimentation en liquide de refroidissement, selon la revendication 3, comprenant en outre :

prévoir une pluralité d'interrupteurs à bascule (SW1 - SW4) correspondant respectivement à la pluralité de vannes (14, 14A - 14D) de sorte qu'au moins un interrupteur à bascule (SW1 - SW4) est orienté vers un premier côté et qu'un autre de la pluralité d'interrupteurs à bascule (SW1 - SW4) est orienté vers un second côté opposé au premier côté, ledit au moins un interrupteur à bascule (SW1 - SW4) correspondant à ladite au moins une vanne ouverte, l'autre de la pluralité d'interrupteurs à bascule (SW1 - SW4) correspondant à une autre de la pluralité de vannes (14, 14A - 14D) autre que ladite au moins une vanne ouverte ; et

à la détection d'un modification d'orientation dudit au moins un interrupteur à bascule (SW1 - SW4) de la pluralité d'interrupteurs à bascule (SW1 - SW4),

spécifier (S36), en tant que vanne ouverte modifiée, une vanne correspondant à l'interrupteur à bascule (SW1 - SW4) dont l'orientation a été modifiée vers le premier côté ; et

spécifier (S37), en tant que vanne fermée modifiée, une vanne correspondant à l'interrupteur à bascule (SW1 - SW4) dont l'orientation a été modifiée vers le second côté.

5. Procédé d'alimentation en liquide de refroidissement, selon l'une des revendications 1 à 4, comprenant en outre :

lors de la détermination (S20) de ladite au moins une vanne, déterminer (S20) au moins une vanne ouverte de la pluralité de vannes (14, 14A - 14D) qui a été ouverte comme spécifié par le code appelé pendant que le liquide de refroidissement est déchargé de la pompe (15) en exécutant le programme d'usinage (19) ;

lors de la détermination (S21) de la région à exposer, déterminer (S21) une région de projection à exposer au liquide de refroidissement projeté à travers au moins une buse de projection de la pluralité de buses (12, 12A - 12D) qui est reliée à ladite au moins une vanne ouverte ;

déterminer (S23) une quantité de projection totale en tant que quantité totale de liquide de refroidissement projetée à travers ladite au moins une buse de projection basé sur le degré de décharge du liquide de refroidissement spécifié par le code appelé ;

afficher (S24) la région de projection et au moins une parmi la quantité totale de projection et une quantité individuelle de projection du liquide de refroidissement projeté à travers chacune de ladite au moins une buse de projection ; et

à la réception d'une commande de modification du degré de décharge, réécrire (S45) le degré de décharge du liquide de refroidissement spécifié par le code appelé en un degré de décharge modifié.

6. Procédé d'alimentation en liquide de refroidissement, selon la revendication 5, comprenant en outre :

prévoir un curseur (SL) comprenant :

un indicateur (IND) configuré pour indiquer le degré de décharge de la pompe (15) spécifié par le code appelé ; et

une poignée (RUN) prévue à une extrémité avant de l'indicateur (IND) ; et

spécifier, en tant que degré de décharge modifié, un degré modifié indiqué par l'indicateur (IND) lors de la détection d'un mouvement de la poignée (RUN).

7. Procédé d'alimentation en liquide de refroidissement, selon l'une des revendications 1 à 6, comprenant en outre, à la réception d'une commande de remplacement du code appelé par un code de remplacement autre que le code appelé parmi ledit au moins un code de spécification de liquide de refroidissement pendant que le liquide de refroidissement est déchargé de la pompe (15) en exécutant le programme d'usinage (19), réécrire (S48) le programme d'usinage (19) pour appeler le code de remplacement dans le programme d'usinage (19).

8. Procédé d'alimentation en liquide de refroidissement, selon l'une des revendications 1 à 7, dans lequel la spécification du degré de décharge du liquide de refroidissement comprend la spécification d'une puissance de la pompe (15).

9. Procédé d'alimentation en liquide de refroidissement, selon la revendication 8, dans lequel la puissance de la pompe (15) est indiquée par une vitesse de rotation de la pompe (15) ou une fréquence de fonctionnement de la pompe (15).

10. Procédé d'alimentation en liquide de refroidissement, selon l'une des revendications 1 à 9, dans lequel une vanne de commande à large zone de la pluralité de vannes (14, 14A - 14D) est prévue à un conduit d'alimentation en liquide de refroidissement de la pluralité de conduits d'alimentation en liquide de refroidissement (13, 13A - 13D) qui est reliée à deux ou plus de buses divisionnaires parmi la pluralité de buses (12, 12A - 12D).

11. Procédé d'alimentation en liquide de refroidissement, selon la revendication 10, dans lequel une région à exposer au liquide de refroidissement projeté à travers les deux ou plus de buses divisionnaires correspond à une section parmi une pluralité de sections obtenues en divisant une région d'usinage de la machine-outil (1).

12. Programme (19) comprenant des instructions qui, lorsque le programme (19) est exécuté par un processeur matériel (2P), amènent le processeur matériel (2P) à exécuter le procédé d'alimentation en liquide de refroidissement selon l'une des revendications 1 à 11.

13. Fournisseur de liquide de refroidissement (10) comprenant :

un support de stockage dans lequel le programme (19) selon la revendication 12 est installé ;
la pompe (15) ;
un réservoir de liquide de refroidissement (11) relié à la pompe (15) et configuré pour stocker le liquide de refroidissement ;
la pluralité de buses (12, 12A - 12D) ;
une pluralité de conduits d'alimentation en liquide de refroidissement (13, 13A - 13D) reliant la pluralité de buses respectives (12, 12A - 12D) à la pompe (15) ; et
une pluralité de vannes (14, 14A - 14D) prévue à la pluralité de conduits d'alimentation en liquide de refroidissement respectifs (13, 13A - 13D).

14. Machine-outil (1) comprenant :

le fournisseur de liquide de refroidissement (10) selon la revendication 13 ;
un processeur matériel (2P) ; et
une mémoire (2M),
le programme (19) étant installé dans la mémoire (2M) et exécuté par le processeur matériel (2P).

FIG. 1

FIG. 2

## FIG. 3

TS

| UNo. | Unit name | | Depth | Cutting allowance | Bottom | Finishing allowance | | | | | | | | |
|---|---|---|---|---|---|---|---|---|---|---|---|---|---|---|
| 4 | Face mill | | 10 | 10 | 1 | 0. | | | | | | | | |
| SNo. | Tool | Nominal diameter | No. | | Approach -X | Approach -Y | Method | ZFD | Cutting -Z | Cutting -R | Peripheral speed | Feed rate | M | M |
| R 1 | Face mill | 80. S | | | 445. | -10. | OU X | ◆ | 2. | 60. | 200. | 1.2 | 8 | 105 |

SS

| FIG | PTN | P1X/CX | P1Y/CY | P3X/R | P3Y | CN1 | CN2 | CN3 | CN4 |
|---|---|---|---|---|---|---|---|---|---|
| 1 | Square | 400 | 10 | 0 | -300 | | | | |

## FIG. 4B

```
1  G54G90G94;
2  G91G28X0Y0Z0;
3  T007M06;
4  G90S796M03M08;
5  M105;
6  G00X-155. Y90. Z50.;
7  Z5.;
8  G01Z0.5F955.2;
9  X45.;
10 Y30.;
11 X-155.;
12 G00Z5.;
13 X-155. Y90.;
14 M100;
15 G01Z0. F382.;
16 X45.;
17 Y30.;
18 X-155.;
19 G00Z5.;
20 G91G28X0Y0Z0;
21 M9;
22 M30;
```

M105

Release setting

## FIG. 4A

```
1  G54G90G94;
2  G91G28X0Y0Z0;
3  T007M06;
4  G90S796M03M08;
5  M105;
6  G00X-155. Y90. Z50.;
7  Z5.;
8  G01Z0.5F955.2;
9  X45.;
10 Y30.;
11 X-155.;
12 G00Z5.;
13 X-155. Y90.;
14 M101;
15 G01Z0. F382.;
16 X45.;
17 Y30.;
18 X-155.;
19 G00Z5.;
20 G91G28X0Y0Z0;
21 M9;
22 M30;
```

M105

M101

Release setting

# FIG. 5

```
        ( START )
            │
            ▼                                    S11
┌─────────────────────────────────────┐
│ Read called code from machining      │
│ program                              │
└─────────────────────────────────────┘
            │                                    S12
            ▼
┌─────────────────────────────────────┐
│ Control opening and/or closing of    │
│ plurality of valves based on called  │
│ code                                 │
└─────────────────────────────────────┘
            │                                    S13
            ▼
┌─────────────────────────────────────┐
│ Control pump to discharge coolant    │
│ by degree of discharge based on      │
│ called code                          │
└─────────────────────────────────────┘
            │
            ▼
         ( END )
```

FIG. 6

FIG. 7A

( START )

Determine at least one valve specified to be opened by each of at least one coolant specifying code — S20

Determine region to be exposed to coolant through at least one nozzle — S21

Display region and each of at least one coolant specifying code in correlation with each other — S22

Determine total amount of coolant to be jetted through at least one jetting nozzle — S23

Display at least one of total amount and amount of coolant to be jetted through each of at least one nozzle in correlation with at least one coolant specifying code — S24

Calculate power consumed when pump is operated based on each of at least one coolant specifying code — S25

Display power consumption in correlation with each of at least one coolant specifying code — S26

Provide slider — S27

Provide at least one toggle switch — S28

Display set power consumption indicator and set coolant amount indicator in initial states — S29

Selection of replacement code detected? — S30

YES → ( B )

NO

( A )

# FIG. 7B

(A)

(D)

S34

Movement of runner of slider detected?

NO

YES

S35

Specify changed degree of discharge

S36

Change in orientation of at least one switch detected?

NO

YES

S37

Specify changed open valve and changed closed valve

S38

Change display of set coolant amount indicator and set power consumption indicator

S39

Command to temporarily change coolant supply received?

NO

YES

S40

Control coolant to be supplied based on at least one of changed degree of discharge, changed open valve, and changed closed valve

S41

Command to release temporary change in coolant supply received?

NO

YES

S42

Perform S12 and S13 again

(C)

# FIG. 7C

C

D

S43

Coolant
discharge parameter update
button pressed?

NO

YES

Change opening and/or closing of plurality of
valves specified in called code

S44

Change degree of discharge of coolant
specified in called code

S45

Change display of coolant amount indicator,
power consumption indicator, and region to be
exposed to coolant

S46

D

EP 4 478 140 B1

FIG. 7D

(B)

Display selected combination with high-lighting — S31

Change display of at least one toggle switch and slider — S32

Change display of set coolant amount indicator and set power consumption indicator — S33

(D)

Movement of runner of slider detected? — S34
NO / YES

Specify changed degree of discharge — S35

Change in orientation of at least one switch detected? — S36
NO / YES

Specify changed open valve and changed closed valve — S37

Change display of set coolant amount indicator and set power consumption indicator — S38

Command to temporarily change coolant supply received? — S39
NO / YES

Control coolant to be supplied based on at least one of changed degree of discharge, changed open valve, and changed closed valve — S40

Command to release temporary change in coolant supply received? — S41
NO / YES

Perform S12 and S13 again — S42

(C)

37

# FIG. 7E

C

Coolant discharge parameter update button pressed? — NO — S43a

YES

Change opening and/or closing of plurality of valves specified in selected replacement code — S44a

Change degree of discharge of coolant specified in selected replacement code — S45a

Change display of coolant amount indicator, power consumption indicator, and region to be exposed to coolant — S46

D

Program writing button pressed? — S47

NO

YES

Rewrite called code to selected replacement code — S48

Perform S11 to S13 based on selected replacement code — S49

D

| T1 No. | T2 Pattern | T3 M | T4 Jetting location | T5 Coolant amount | T6 Power consumption | SCB |
|---|---|---|---|---|---|---|
| 0 | A | M101 | A B C D | | | |
| 1 | A | | A B C D | | | |
| 2 | A | | A B C D | | | |
| 3 | B | M102 | B C D | | | |
| 4 | B | | A C D | | | |
| 5 | B | | A B C | | | |
| 6 | C | M103 | A C D | | | |
| 7 | C | M104 | A B D | | | |
| 8 | C | | B C D | | | |
| 9 | C | M105 | A B C D | | | |
| 10 | B | | A B C D | | | |
| 11 | B | | C D | | | |

SEL

| Apply setting | Release setting | Write in program |
|---|---|---|
| BT1 | BT2 | BT3 |

AINT

FIG. 8

# FIG. 9

B

Display selected combination with high-lighting — S51

Command to temporarily change coolant supply received? — S52

NO

YES

Control opening and/or closing of plurality of valves based on selected replacement code — S53

Control pump to discharge coolant by another degree of discharge — S54

Command to release temporary change in coolant supply received? — S55

NO

YES

Perform S12 and S13 again — S56

Program writing button pressed? — S57

NO

YES

Rewrite coolant specifying code in machining program to selected replacement code — S58

Perform S11 to S13 based on selected replacement code — S59

END

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017113849 A
- JP 2007030109 A
- JP 5269955 B
- JP 7127565 A
- US 2018029183 A1
- US 2014338765 A1